(19) Europäisches Patentamt European Patent Office Office européen des brevets

(11) **EP 4 676 156 A1**

(12) **EUROPEAN PATENT APPLICATION**
published in accordance with Art. 153(4) EPC

(43) Date of publication:
**07.01.2026 Bulletin 2026/02**

(21) Application number: **23929126.3**

(22) Date of filing: **27.03.2023**

(51) International Patent Classification (IPC):
***H04W 74/08*** *(2024.01)*

(52) Cooperative Patent Classification (CPC):
**H04W 74/08**

(86) International application number:
**PCT/CN2023/084122**

(87) International publication number:
**WO 2024/197524 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **LENG, Bingxue
Dongguan, Guangdong 523860 (CN)**
• **LU, Qianxi
Dongguan, Guangdong 523860 (CN)**

(74) Representative: **Grassi, Stefano
Bugnion S.p.A.
Viale Lancetti, 17
20158 Milano (IT)**

(54) **WIRELESS COMMUNICATION METHOD AND TERMINAL DEVICE**

(57)    The present application provides a wireless communication method and a terminal device. The method comprises: a terminal device determines a first policy related to consecutive listen before talk (LBT) failures, the detection of the consecutive LBT failures being related to a resource granularity.

A terminal device determines a first policy related to a consistent LBT failure based on first information ⸺ S1010

**FIG. 10**

EP 4 676 156 A1

## Description

TECHNICAL FIELD

The present disclosure relates to the technical field of communications, and particularly, to a method for wireless communication and a terminal device.

BACKGROUND

The terminal device may transmit a signal based on a listen before talk (LBT) principle on an unlicensed spectrum. If a channel sensing result is that the channel is idle, the terminal device may use the channel of the unlicensed spectrum for signal transmission; and if the channel sensing result is that the channel is busy, typically, the terminal device is allowed to use the channel of the unlicensed spectrum for signal transmission.

For a sidelink communication scenario, enhanced consideration for a consistent LBT failure is introduced. However, at present, there is no specific rule related to details of the consistent LBT failure.

SUMMARY

The present disclosure provides a method for wireless communication and a terminal device. Several aspects related to the present disclosure will be described in detail below.

In a first aspect, there is provided a method wireless communication, the method includes that a terminal device determines a first policy related to a consistent LBT failure, detection of the consistent LBT failure being related to a resource granularity.

In a second aspect, there is provided a terminal device, the terminal device includes a determination unit that is configured to determine a first policy related to a consistent LBT failure, detection of the consistent LBT failure being related to a resource granularity.

In a third aspect, there is provided a terminal device, the terminal device includes a memory and a processor. The memory is configured to store a program and the processor is configured to call the computer program in the memory, to perform the method of the first aspect.

In a fourth aspect, there is provided an apparatus, the apparatus includes a processor configured to call a program from a memory to perform the method of the first aspect.

In a fifth aspect, there is provided a chip, the chip includes a processor configured to call a program from a memory, to cause a device on which the chip is mounted to perform the method of the first aspect.

In a sixth aspect, there is provided a computer-readable storage medium for storing a program thereon which, when being run on a computer, causes the computer to perform the method of the first aspect.

In a seventh aspect, there is provided a computer program product, the computer program product includes a program which, when being run on a computer, causes the computer to perform the method of the first aspect.

In an eighth aspect, there is provided a computer program, the computer program, when being run on a computer, causes the computer to perform the method of the first aspect.

In the present disclosure, the information related to the resource granularity is considered when detecting the consistent LBT failure, and further, the policy related to the consistent LBT is determined. Therefore, a specific solution for the terminal device to perform the operations related to the consistent LBT failure is provided.

BRIEF DESCRIPTION OF THE DRAWINGS

FIG. 1 is a diagram of an example of system architecture of a wireless communication system for applying embodiments of the present disclosure.

FIG. 2 is a diagram of an example of a scenario of a sidelink communication within network coverage.

FIG. 3 is a diagram of an example of a scenario of a sidelink communication partially covered by a network.

FIG. 4 is a diagram of an example of a scenario of a sidelink communication outside network coverage.

FIG. 5 is a schematic diagram of a sensing based resource selection method in a sidelink communication system.

FIG. 6 is a diagram of an example of a broadcast based sidelink communication mode.

FIG. 7 is a diagram of an example of a unicast based sidelink communication mode.

FIG. 8 is a diagram of an example of a multicast based sidelink communication mode.

FIG. 9 is a schematic diagram of a correspondence relationship among different resources according to the present disclosure.

FIG. 10 is a schematic flowchart of a method for wireless communication provided in an embodiment of the present disclosure.

FIG. 11 is a schematic flowchart of a communication method, in which a consistent LBT failure occurs in an RB set and a resource switching policy is switching a resource pool, provided in an embodiment of the present disclosure.

FIG. 12 is a schematic flowchart of a communication method, in which a consistent LBT failure occurs in an RB set and a resource switching policy is switching an RB set, provided in an embodiment of the present disclosure.

FIG. 13 is a schematic flowchart of a communication method, in which a consistent LBT failure occurs in a resource pool and a resource switching policy is switching a resource pool, provided in an embodiment of the present disclosure.

FIG. 14 is a schematic block diagram of a terminal device according to an embodiment of the present disclosure.

FIG. 15 is a schematic structural diagram of an apparatus provided in an embodiment of the present disclosure.

DETAILED DESCRIPTION

Solutions of the present disclosure will be described with reference to the accompanying drawings.

**Communication system architecture**

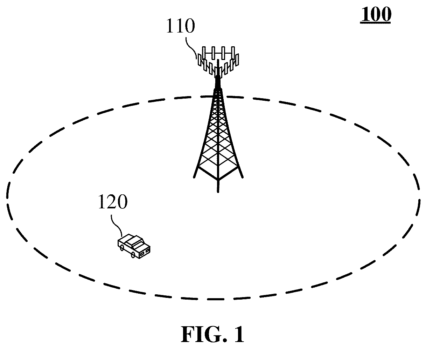

FIG. 1 is a diagram of an example of system architecture of a wireless communication system 100 for applying embodiments of the present disclosure. The wireless communication system 100 may include a network device 110 and a terminal device 120. The network device 110 may be a device that communicates with the terminal device 120. The network device 110 may provide communication coverage to a particular geographic area, and may communicate with the terminal device 120 located within the coverage area.

FIG. 1 illustrates one network device and one terminal device by way of example. Optionally, the wireless communication system 100 may include one or more network devices and/or one or more terminal devices. For a network device 110, all the one or more terminal devices 120 may be located within a network coverage range of the network device 110, or may be located outside the network coverage range of the network device 110, or some of which may be located within the coverage range of the network device 110, and some of which may be located outside the network coverage range of the network device 110. This is not limited in the embodiment of the present disclosure.

Optionally, the wireless communication system 100 may further include other network entities such as a network controller and a mobility management entity. This is not limited in this embodiment of the disclosure.

It is understood that the technical solutions of the embodiments of the present disclosure may be applied to various communications systems, such as: a 5th generation (5G) system or a new radio (NR) system, a a long term evolution (LTE) system, an LTE frequency division duplex (FDD) system, an LTE time division duplex (TDD) system, and the like. The technical solutions provided by the present disclosure may also be applied to a future communication system such as a sixth generation mobile communication system, a satellite communication system and the like.

In the embodiments of the present disclosure, the terminal device may be referred to as user equipment (UE), an access terminal, a subscriber unit, a subscriber station, a mobile console, a mobile station (MS), a mobile terminal (MT), a remote station, a remote terminal terminal, a mobile device, a user terminal, a wireless communication device, a user agent, or user apparatus. In the embodiments of the present disclosure, the terminal device may provide voice and/or data connectivity to a user, for example, for connecting to humans, goods and machines. For example, the terminal device may be a handheld device having a wireless connection function, an on-board device and the like. In an embodiment of the present disclosure, the terminal device may be a mobile phone, a tablet computer (pad), a laptop computer, a palm computer, a mobile Internet device (MID), a wearable device, a vehicle, a wireless terminal in industrial control, a wireless terminal in self driving, a wireless terminal in remote medical surgery, a wireless terminal in smart grid, a wireless terminal in transportation safety, a wireless terminal in smart city, or a wireless terminal in smart home, etc. For example, the terminal device may act as a scheduling entity that provides a sidelink signal between terminal devices in a vehicle-to-everything (V2X) or device-to-device (D2D) communication, etc. For example, a cellular telephone and an automobile communicate with each other through the sidelink signal. A communication between a cellular phone and a smart home device without relaying the communication signal through a base station. Alternatively, the terminal device may act as a base station.

The network device in an embodiment of the present disclosure may be a device for communicating with the terminal device, and the network device may also be referred to as an access network device or a radio access network device, for example, the network device may be a base station. The network device in the embodiments of the present disclosure may be a radio access network (RAN) node (or device) that connects the terminal device to the wireless network. The base station may broadly cover or be replaced with various names such as a NodeB, an evolved NodeB (eNB), a next generation NodeB (gNB), a relay station, an access point, a transmitting and receiving point (TRP), a transmitting point (TP), a master NodeB (MeNB), a secondary NodeB (SeNB), a multi-standard radio (MSR) node, a home base station, a network controller, an access node, a wireless node, an access point (AP), a transmitting node, a transmitting and receiving node, a base band unit (BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a donor node, or the like, or a combination thereof. The base station may be also referred to as a communication module, a modem, or a chip arranged within the aforementioned devices or apparatus. The base station may be a mobile switching center, a device that performs a base station function in a D2D, V2X, or machine-to-machine (M2M) communication, a network side device in a 6G network, a device that performs the base station function in a future communication system, or the like. The base stations may support networks with the same or different access technologies. The specific technology and the specific device form adopted by the network device are not limited in the embodiments of the present disclosure.

The base station may be fixed or mobile. For example, a helicopter or an unmanned aerial vehicle may be configured to act as a mobile base station, and one or more cells may move according to the location of the mobile base station. In other examples, the helicopter or the unmanned aerial vehicle may be configured as a device communicating with another base station.

In some deployments, the network device in the embodiments of the present disclosure may be a CU or a DU, or the network device may include the CU and the DU. The gNB may also include an AAU.

The terminal device may be deployed on land, including indoors or outdoors, handheld or vehicle-mounted; or may also be deployed on water; or may also be deployed on an airplane, a balloon and a satellite in the air. The scenario in which the network device and the terminal device are located is not limited in the embodiments of the present application.

## Sidelink communication under different cases of network coverage

A sidelink communication is a sidelink-based communication technology. The sidelink communication may be, for example, a D2D or a V2X communication. Communication data is received or transmitted between the terminal device and the network device in a traditional cellular system. However, the sidelink communication supports direct transmission of communication data between the terminal devices. Compared with traditional cellular communication, the direct transmission of the communication data between terminal devices can have higher spectral efficiency and lower transmission delay. For example, the V2X system uses the sidelink communication technology.

In the sidelink communications, the sidelink communications may be divided into, according to the network coverage in which the terminal device is located, a sidelink communication within the network coverage, a sidelink communication partially covered by the network coverage, and sidelink communication outside the network coverage.

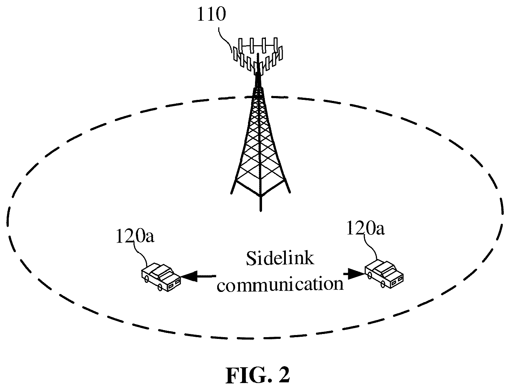

FIG. 2 is a diagram of an example of a scenario of a sidelink communication within network coverage. In the scenario illustrated in FIG. 2, two terminal devices 120a are located within the coverage range of the network device 110. Therefore, both the two terminal devices 120a may receive a configuration signaling from the network device 110 (the configuration signaling in the present disclosure may also be replaced with configuration information), and determine the sidelink configuration according to the configuration signaling of the network device 110. After both the terminal devices 120a are configured on sidelink, the terminal devices may perform the sidelink communication on the sidelink.

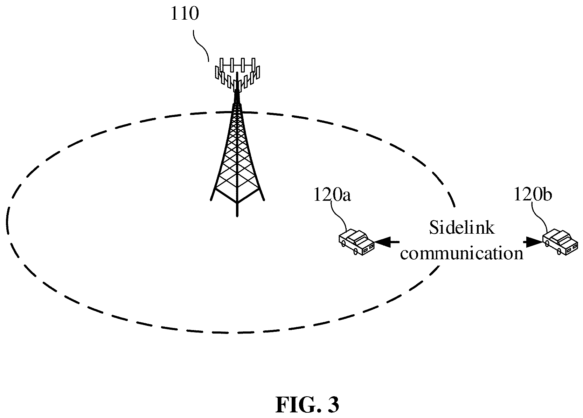

FIG. 3 is a diagram of an example of a scenario of a sidelink communication partially covered by a network. In the scenario illustrated in FIG. 3, the terminal device 120a performs a sidelink communication with the terminal device 120b. Since the terminal device 120a is located within the coverage range of the network device 110, the terminal device 120a can receive the configuration signaling from the network device 110 and determine the sidelink configuration according to the configuration signaling of the network device 110. The terminal device 120b is located outside the network coverage range and cannot receive the configuration signaling from the network device 110. In this case, the terminal device 120b may determine the sidelink configuration according to pre-configuration information and/or information carried in a physical sidelink broadcast channel (PSBCH) sent by the terminal device 120a located within the coverage range of the network. After both the terminal device 120a and the terminal device 120b are configured on sidelink, terminal devices may perform the sidelink communication on the sidelink.

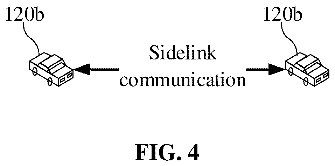

FIG. 4 is a diagram of an example of a scenario of a sidelink communication outside network coverage. In the scenario illustrated in FIG. 4, both the two terminal devices 120a are located outside the coverage range of the network device 110. In this case, both the terminal devices 120b may determine the sidelink configuration according to the pre-configuration information. After both the terminal devices 120b are configured on sidelink, they may perform the sidelink communication on the sidelink.

## D2D study at different stages

In the 3rd generation partnership project (3GPP) communication protocol, D2D is divided into different stages for study, which is described below by way of example.

In Rel-12/13, the D2D communication mainly studies proximity services (ProSe), which is mainly aimed at public safety services. In the ProSe, the terminal device may perform discontinuous transmission or reception of data on the sidelink by configuring a location of a resource pool in a time domain (for example, the resource pool is discontinuous in the time domain), thereby achieving power saving.

In Rel-14/15, the V2X system mainly studies a vehicle-vehicle communication scenario, and it is mainly oriented to communication services of relative movement of vehicle-vehicle and vehicle-person with a high speed. In V2X, since the on-board system has continuous power supply, power efficiency is not a major problem, but the delay of data transmission is a major problem. Therefore, the terminal device needs to perform continuous transmission or reception in the system design.

In Rel-14, a scenario in which a wearable device accesses the network through a mobile phone is studied, which is mainly oriented to scenarios with a low mobile speed and low power access. In further enhancements device to device (FeD2D), a conclusion in the pre-research stage is that the base station may configure discontinuous reception (DRX) parameters of a remote terminal through a relay terminal, but since this topic does not further enter a standardization stage, therefore, specific details of how to configure the DRX have not been concluded yet.

## Modes of sidelink communication (LTE D2D/V2X)

Two modes for sidelink communication are defined in some standards or protocols (such as 3GPP): a first mode and a second mode.

In the first mode, a resource of the terminal device (the resource mentioned in the present disclosure may also be referred to as a transmission resource such as a time-frequency resource) is allocated by the network device. The terminal device may transmit data on the sidelink according to the resource allocated by the network device. The network device may allocate a resource for a single transmission to the terminal device, or may also allocate a resource for a semi-static transmission to the terminal device. The first mode may be applied to a scenario with the network device coverage, such as the scenario illustrated in FIG. 2. In the scenario illustrated in FIG. 2, since the terminal device 120a is located within the network coverage range of the network device 110, therefore, the network device 110 may allocate a resource for the terminal device 120a to be used in the sidelink transmission process.

In the second mode, the terminal device may select one or more resources in a resource pool (RP) autonomously. Then, the terminal device may perform the sidelink transmission according to the selected resource. For example, in the scenario illustrated in FIG. 4, the terminal device 120b is located outside the coverage range of a cell. Therefore, the terminal device 120b may autonomously select the resource for the sidelink transmission in a pre-configured resource pool. Optionally, in the scenario illustrated in FIG. 2, the terminal device 120a may also autonomously select one or more resources for the sidelink transmission in the resource pool configured by the network device 110.

## NR V2X

LTE V2X mainly studies for a broadcast scenario, and NR V2X is further extended to a unicast scenario and a multicast scenario on the basis of the LTE V2X. In other words, application scenarios of the NR V2X include broadcast, unicast and multicast scenarios. NR studies the application of V2X in these scenarios.

Similar to the LTE V2X, the NR V2X also defines two resource grant modes. In addition, the terminal device may also be in a mixed mode, that is, the terminal device may acquire the resources through both the first mode and the second mode. The acquisition of the resources by the terminal device may be indicated by a sidelink grant, that is, the sidelink grant indicates time-frequency positions of resources of a corresponding physical sidelink control channel (PSCCH) and a physical sidelink shared channel (PSSCH).

Compared to the LTE V2X, in addition to a feedback-free hybrid automatic repeat request (HARQ) retransmission initiated by the terminal device autonomously, the NR V2X introduces a feedback-based HARQ retransmission. This feedback-based HARQ retransmission is not limited to the unicast communication, but also applicable to the multicast communication.

Similar to the LTE V2X, in the NR V2X, since the on-board system has the continuous power supply, the power efficiency is not the major problem, but the delay of data transmission is the major problem. Therefore, the terminal device needs to perform the continuous transmission or reception in the system design.

## Resource selection manner of NR V2X in second mode

In the NR V2X, some new features are introduced, such as supporting a large number of aperiodic services, increasing number of retransmissions, and more flexible resource reservation periods. These features have a great influence on the mode for autonomous resource selection by the terminal device. In the second mode, the terminal device may select a resource, that is not reserved by another terminal device or is reserved by another terminal device but has a lower reception power, in the resource pool through decoding sidelink control information (SCI) transmitted by another terminal device and measuring the reception power of the sidelink.

In some implementations, the terminal device may perform the resource allocation scheme in the second mode through the following operation 1 and operation 2.

Operation 1: the terminal device takes all available resources in a resource selection window as a resource set A. Specifically, this operation may be divided into case 1-1 and case 1-2.

In case 1-1, if the terminal device does not perform sensing in some slots in a sensing window, all resources in slots, in the selection window, corresponding to these non-sensed slots are excluded. In some implementations, the terminal device may determine the slots, in the selection window, corresponding to the non-sensed slots in the sensing window, based on a set of values of a resource reservation period field in the used resource pool configuration.

In case 1-2, if the terminal device detects a PSCCH in the sensing window, the terminal device measures a reference signal received power (RSRP) of the PSCCH or the RSRP of a PSSCH scheduled by the PSCCH. If the measured RSRP is larger than a sidelink RSRP (SL-RSRP) threshold and it is determined that the reserved resource is within the resource selection window according to the resource reservation information in sidelink control information transmitted in the PSCCH, the corresponding resource is excluded from the set A. If the remaining resources in the resource set A are less than X% of all resources, before resource exclusion, in the resource set A, the SL-RSRP threshold is raised by 3 dB, and the operation 1 is re-performed. In some implementations, the possible values of X may be {20, 35, 50}, and the terminal device may determine the parameter X from this set of values according to a priority of data to be transmitted. Compared with the LTE V2X where the value of X% is fixed at 20%, the value of X% in the NR V2X is more flexible. The value of X% in the NR V2X may be configured by the network device or may be pre-configured. In some implementations, the value of X% may be calculated in a unit of resource pool.

In addition, the above-mentioned SL-RSRP threshold is associated with a priority carried in the PSCCH detected by the terminal and the priority of the data to be transmitted by the terminal device. The terminal device sets the remaining resources after the resource exclusion in the set A as a candidate resource set.

Operation 2: the terminal device randomly selects several resources from the candidate resource set as transmission resources for initial transmission and retransmission of the terminal device. In some implementations, the terminal device may randomly select one or more transmission resources with an equal probability in the resource set A. It is noted that one or more of the following two conditions need to be satisfied when the terminal device selects a plurality of transmission resources.

Condition 1: after removing some exception cases, the terminal device may enable the selected retransmission resource to be indicated by a previously transmitted first-order SCI. The exception cases includes one or more of: case 1, the terminal device is unable to select a resource satisfying the time domain restriction from the resource set A after performing the resource exclusion; case 2, the terminal device may drop the transmission due to factors such as resource preemption, congestion control, and conflict with an uplink service, which may result in no previously transmitted first-order SCI indication for the transmission resource of some retransmission.

Condition 2: for any two selected time-frequency resources, the terminal device should ensure that: these two resources are separated by at least a duration Z in the time domain if the former transmission resource of these two resources requires HARQ feedback. When no resource satisfying the time domain restriction is able to be selected in the resource selection, for example, when a packet delay budget (PDB) is short but the number of retransmissions is large, the terminal device may drop the selection of some retransmission resources or deactivate HARQ feedback for some transmissions. The scheme that the terminal device specifically adopts may depend on the implementation of the terminal device.

**Sensing based resource selection manner**

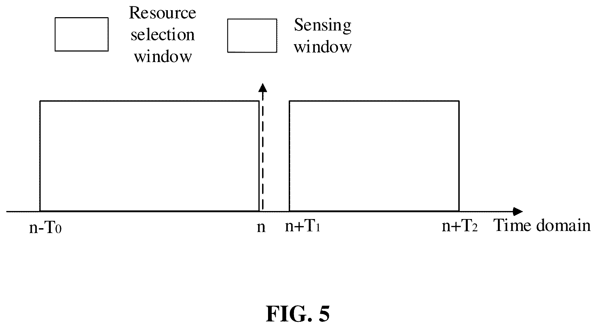

With reference to FIG. 5, the terminal device may trigger the resource selection or re-selection in slot n. In some implementations, the slot n may be a slot in which a higher layer triggers a physical layer to report the candidate resource set. The resource selection window starts at $n+T_1$ and ends at $n+T_2$, denoted as $[n+T_1, n+T_2]$, where $0 < = T_1 < = T_{proc,1}$, and $T_{proc,1}$ is 3 slots, 5 slots, 9 slots, or 17 slots when a subcarrier spacing is 15 kHz, 30 kHz, 60 kHz, or 120 kHz, respectively. $T_{2min} < = T_2 < =$ remaining delay budget of service, the set of values of $T_{2min}$ is $\{1, 5, 10, 20\} * 2^\mu$ slots, where $\mu = 0, 1, 2,$ or 3 respectively corresponds to the case that the subcarrier spacing is 15 kHz, 30 kHz, 60 kHz, or 120 kHz. The terminal device determines $T_{2min}$ from the set of values according to the priority of the data to be transmitted by the terminal device. For example, when the subcarrier spacing is 15 kHz, the terminal device determines $T_{2min}$ from the set $\{1, 5, 10, 20\}$ according to the priority of the data to be transmitted by the terminal device. When $T_{2min}$ is greater than or equal to the remaining delay budget of service, $T_2$ is equal to the remaining delay budget of service. The remaining delay budget is a difference between a time corresponding to a delay requirement of the data and a current time. For example, the delay requirement for a data packet arriving in slot n is 50 milliseconds, and assuming that one slot is 1 millisecond, then the remaining delay budget is 50 milliseconds when the current time is slot n, and the remaining delay budget is 30 milliseconds when the current time is slot n+20.

Before the resource selection, the terminal device needs to perform sensing in the sensing window from $n-T_0$ to $n-T_{proc,0}$, and the value of $T_0$ is 100 milliseconds or 1100 milliseconds. $T_{proc,0}$ is 1 slot, 1 slot, 2 slots, or 4 slots when the subcarrier spacing is 15 kHz, 30 kHz, 60 kHz or 120 kHz, respectively. Generally, the terminal device monitoring the SCI from other terminal devices in each slot (except its own transmission slot). If the resource selection or re-selection is triggered in slot n, the terminal device may use a resource sensing result from $n-T_0$ to $n-T_{proc,0}$. The resource selection process is described below in combination with operation a to operation b.

Operation a: the terminal device (such as the physical layer of the terminal device) excludes resources that are not applicable for the sidelink transmission from the resource selection window according to the channel sensing result.

The terminal device takes all candidate available resources, that belong to the resource pool used by the terminal device, in the resource selection window as the resource set A. A resource in the set A may be denoted as R (x, y), where x and y indicate a frequency domain position and a time domain position of the resource, respectively. Further, the initial number of resources in the set A is denoted as $M_{tatal}$.

The specific sensing mode of the terminal device may be divided into two cases a-1 and a-2.

In case a-1, if the terminal device transmits data in the slot a in the sensing window and does not perform sensing, the terminal device may determine whether the slot a + q * Prxlg overlaps with the resource R(x, y + j * Ptxlg). If they overlap, the resource R (x, y) is excluded from the resource set A, where j = 0, 1, 2, 3... C-1, C is determined by a random counter (counter) value generated by the terminal device; Ptxlg is the number of logical slots after the resource reservation period Ptx of the terminal is transformed into logical slots; Prxlg is the number of logical slots after Prx is transformed into logical slots, where Prx is an allowed resource reservation period in the resource pool. If Prx < Tscal and n - m < = Prxlg, then $Q = \lceil Tscal / Prx \rceil$, otherwise, Q = 1. Tscal is equal to a value after T2 is transformed to milliseconds.

In case a-2, if the terminal device detects the first SCI transmitted in the PSCCH in E(v, m) in slot m in the sensing window, the terminal device measures the SL-RSRP of the PSCCH or the SL-RSRP of the PSSCH scheduled by the PSCCH (i.e., the SL-RSRP of the associated PSSCH transmitted in a same slot in which the PSCCH is transmitted).

If the measured SL-RSRP is larger than the SL-RSRP threshold, and the resource reservation among transport blocks (TBs) is activated in the resource pool used by the terminal device, the terminal device assumes that first sidelink control information of the same content is received in the slot m + q * Prxlg, where Q = 1, 2, 3... Q, if Prx < Tscal and n-m < = Prxlg, then $Q = \lceil Tscal/Prx \rceil$, otherwise, Q = 1; Tscal is equal to a value after T2 is transformed to milliseconds; Prxlg is the number of logical slots after Prx is converted into logical slots, where Prx is the resource reservation period indicated by "resource reservation period" in the first sidelink control information transmitted in the PSCCH detected by the terminal device. The terminal device may determine whether a resource indicated by a "time resource assignment" field and a "frequency resource assignment" field in the first sidelink control information received in the slot m and resources indicated by the "time resource assignment" fields and "frequency resource assignment" fields in the Q pieces of first sidelink control information which are assumed to be received overlap with the resource R (x, y + j * Ptxlg). If they are overlap, the terminal device excludes the corresponding resource R (x, y) from the set A. The above-mentioned j = 0, 1, 2, 3... C-1, C is determined by a random counter value generated by the terminal; Ptxlg is the number of logical slots after Ptx is transformed into logical slots, and Ptx is the resource reservation period determined by the terminal device that performs the resource selection.

The above-mentioned RSRP threshold is determined based on the priority P1 carried in the PSCCH detected by the terminal device and the priority P1 of the data to be transmitted by the terminal device. The configuration of the resource pool used by the terminal device may include an SL-RSRP threshold table, and the SL-RSRP threshold table includes SL-RSRP thresholds corresponding to all priority combinations. The configuration of the resource pool may be configured by the network or pre-configured. If the remaining resources in the resource set A after the resource exclusion are less than $M_{total}$ * X%, the terminal device may raise the SL-RSRP threshold by 3 dB and re-perform the operation a, and the possible values of X may be {20, 35, 50}. The configuration of the resource pool used by the terminal device includes a correspondence relationship between the priorities and the possible values of X, and the terminal device may determine the value of X according to the priority of the data to be transmitted and the correspondence relationship.

The physical layer of the terminal device may report the resource set A after the resource exclusion as the candidate resource set to the higher layer, that is, a media access control (MAC) layer of the terminal.

Operation b: the higher layer (such as the MAC layer) randomly selects a resource from the reported candidate resource set to transmit the data. That is, the terminal device randomly selects the resource from the candidate resource set to transmit the data.

It is noted that the above-mentioned RSRP threshold is determined based on the priority P1 carried in the PSCCH detected by the terminal device and the priority P1 of the data to be transmitted by the terminal device.

In addition, whether the terminal device compares the measured PSCCH-RSRP or the PSSCH-RSRP scheduled by the PSCCH with the SL-RSRP threshold depends on the resource pool configuration of the resource pool used by the terminal device. The configuration of the resource pool may be configured by the network or pre-configured.

It is noted that the possible values of the above X% may be {20%, 35%, 50%}. The configuration of the resource pool used by the terminal device includes a correspondence relationship between the priorities and the possible values, and the terminal device may determine the value of X% according to the priority of the data to be transmitted and the correspondence relationship. The resource pool configuration may be configured by the network or pre-configured.

## Data transmission mode of sidelink communication

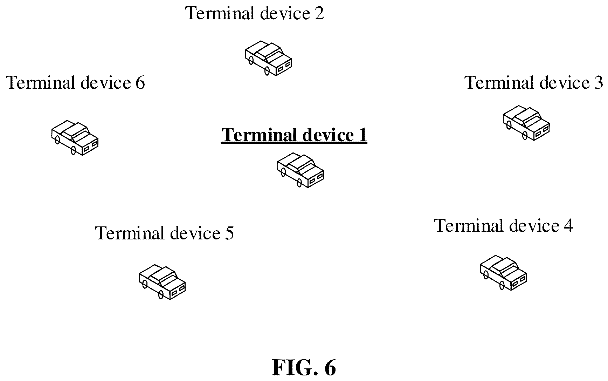

Some sidelink communication systems (such as long term evolution vehicle to everything (LTE-V2X)) support a broadcast based data transmission mode (hereinafter referred to as a broadcast transmission). For the broadcast transmission, the receiver terminal may be a terminal device around the transmitter terminal. Taking FIG. 6 as an example, the terminal device 1 is a transmitter terminal, and the receiver terminal corresponding to the transmitter terminal may be any terminal device around the terminal device 1, and may be, for example, the terminal device 2 to the terminal device 6 in FIG. 6.

In addition to the broadcast transmission, some communication systems support a unicast based data transmission mode (hereinafter referred to as unicast transmission) and/or a multicast based data transmission mode (hereinafter referred to as multicast transmission). For example, the new radio vehicle to everything (NR-V2X) is expected to support autonomous driving. The Autonomous driving imposes higher requirements for data interaction between vehicles. For example, the data interaction between vehicles demands higher throughput, lower delay, higher reliability, a larger coverage range and a more flexible resource allocation mode. Therefore, in order to improve performance of the data interaction between vehicles, the NR-V2X introduces the unicast transmission and the multicast transmission.

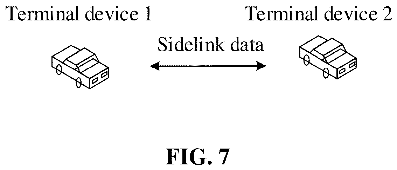

For the unicast transmission, the receiver terminal generally has only one terminal device. Taking FIG. 7 as an example, the unicast transmission is performed between the terminal device 1 and the terminal device 2. The terminal device 1 may be a transmitter terminal, and the terminal device 2 may be a receiver terminal, or the terminal device 1 may be the receiver terminal, and the terminal device 2 may be the transmitter terminal.

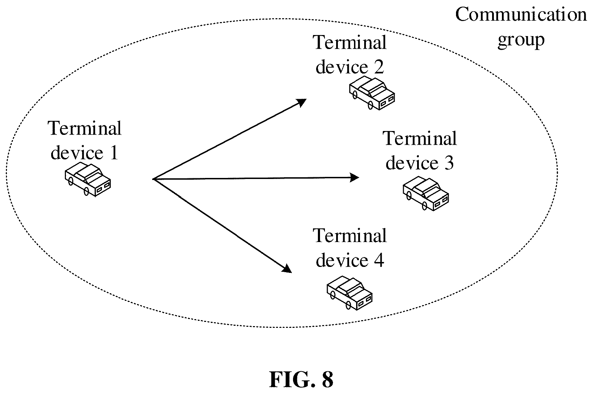

For the multicast transmission, the receiver terminals may be terminal devices within a communication group, or the receiver terminals may be terminal devices within a certain transmission distance. Taking FIG. 8 as an example, the terminal device 1, the terminal device 2, the terminal device 3, and the terminal device 4 constitute a communication group. If the terminal device 1 transmits data, other terminal devices (the terminal device 2 to the terminal device 4) in the group may all be the receiver terminals.

## Unlicensed spectrum

The unlicensed spectrum is a spectrum divided by countries and regions and used for wireless device communication. The unlicensed spectrum is usually considered as a shared spectrum. In other words, communication devices in the same communication system or different communication systems can use the spectrum as long as they meet regulatory requirements set by countries or regions on this spectrum, and do not need to apply for exclusive spectrum authorization from the government.

Some countries or regions have stipulated the regulatory requirements needed to be met when using the unlicensed spectrum, to make various communication devices (or communication systems) using the unlicensed spectrum coexist friendly on the spectrum. For example, the communication devices follow the "LBT" principle. In the LBT, the communication device needs to perform channel sensing before transmitting a signal on a channel of the unlicensed spectrum. If a channel sensing result is that the channel is idle, the communication device may use the channel of the unlicensed spectrum for signal transmission; and if the channel sensing result is that the channel is busy, generally, the communication device may not be allowed to use the channel of the unlicensed spectrum for signal transmission.

## Relationship among resources

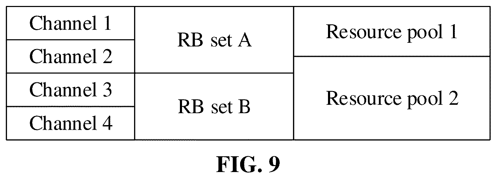

The resources involved in the embodiments of the present disclosure may include a channel, a resource block (RB) set, and a resource pool. With reference to FIG. 9, the relationship among these three kinds of resources is introduced below.

In some embodiments, one RB set may be associated with one or more resource pools, or one resource pool may be associated with one or more RB sets. The RB sets associated with different resource pools may overlap, or the RB sets associated with different resource pools may be different.

As illustrated in FIG. 9, an RB set A may be associated with a resource pool 1 and a resource pool 2, and some of resources in the RB set A belong to resources in the resource pool 1 and the other part of resources in the RB set A belong to resources in the resource pool 2. A resource pool 2 is associated with the RB set A and the RB set B, and some resources in the resource pool A belong to the resources in the RB set A, and the other part of resources belong to the resources in the RB set B. In the scheme illustrated in FIG. 9, both the resource pool 1 and the resource pool 2 include resources in the resource set A.

In the scheme illustrated in FIG. 9, the resources in the resource pool 1 and the resources in the resource pool 2 do not overlap. However, in some implementations, the resources in the resource pool 1 and the resources in the resource pool 2 may overlap.

One RB set may be associated with one or more LBT channels. Taking FIG. 9 as an example, the RB set A may be associated with channel 1 and channel 2, and the RB set B may be associated with channel 3 and channel 4. The channel may be the minimum frequency domain granularity for performing the LBT, therefore, the channel may also be referred to as an LBT channel.

## NR in unlicensed spectrum (NR-U)

When the terminal device detects a consistent uplink LBT fault, the terminal device may adopt measures specified in the protocol. The LBT detection of the terminal device may be performed per bandwidth part (BWP) and based on all uplink transmissions within the BWP. When the consistent uplink LBT fault is detected on a secondary cell (SCell), the terminal device may report the LBT fault to the network device on a serving cell different from the SCell in which the fault is detected. The terminal device may report the LBT failure through a medium access control control element (MAC CE). The network device is a master node (MN) or a secondary node (SN). The MN is used for a master cell group (MCG) and the SN is used for a secondary cell group (SCG). If there is no resource available to transmit the MAC CE, the terminal device may transmit a scheduling request (SR).

When the consistent uplink LBT failure is detected on the SpCell, the terminal device may switch to another uplink (UL) BWP configured with a random access channel (RACH) resource on the cell, initiate the random access, and report the fault through the MAC CE. When multiple UL BWPs are available for switching, the terminal device may select one of the multiple UL BWPs based on its own implementation.

For a primary secondary cell (PSCell), if a consistent uplink LBT fault is detected on all UL BWPs configured with the RACH resources, the terminal device may declare an SCG radio link failure (RLF) and report the failure to the MN through SCGFailureInformation.

For a primary cell (PCell), if the terminal device detects the uplink BWP failure on all UL BWPs with configured RACH resources, the terminal device may declare an RLF.

### sidelink-unlicense (SL-U)

In the NR-V2X system, the resource for the terminal device to perform sidelink data transmission may be allocated by the network device (for example, the resource allocation manner in the first mode) or determined by the terminal device itself based on the resource sensing result (for example, the resource selection manner in the second mode), and these two resource allocation manners may also be applied to the SL-U scenario.

In the SL-U system, after the terminal device determines the sidelink transmission resource, the terminal device needs to perform the LBT before data transmission. If the LBT is successful, the data transmission may be performed, otherwise, the data may not be transmitted on the determined sidelink transmission resource. If the LBT is unsuccessful, the terminal device may consider dropping the transmission or triggering resource re-selection and so on.

Enhanced consideration for the consistent LBT failure is introduced in order to support the terminal device to operate correctly on the unlicensed spectrum. The terminal device may determine the consistent LBT failure and perform recovery of the consistent LBT failure at the MAC layer. For example, the terminal device may be configured with a maximum number of BLT failure indications and a timer, the maximum number of BLT failure indications and the timer may be used for determining whether to trigger the consistent LBT failure. Every time the physical layer (or physical layer entity) reports the LBT failure indication to the MAC layer (or MAC layer entity), the MAC layer needs to reset the timer and trigger the timer to start. When the number of LBT failure indications consistently reported by the physical layer exceeds the configured maximum number, the MAC layer may trigger a consistent LBT failure procedure. On the other hand, if the MAC layer receives no LBT failure indication reported by the physical layer until the timer expires, the MAC layer may reset the counter and the timer.

The consistent LBT failure may also be referred to as an LBT continuous failure, a continuous LBT failure, or the like, and this name is not specifically limited in the embodiments of the present disclosure.

However, at present, it is only mentioned in the protocol that the consistent LBT failure may be triggered, and there is no specific rule related to details of the consistent LBT failure.

Therefore, there is provided a method for wireless communication and an apparatus in the embodiments of the present disclosure, the information related to the resource granularity is considered when detecting the consistent LBT failure, and further the policy related to the consistent LBT is determined. Therefore, a specific solution for the terminal device to perform the operations related to the consistent LBT failure is provided.

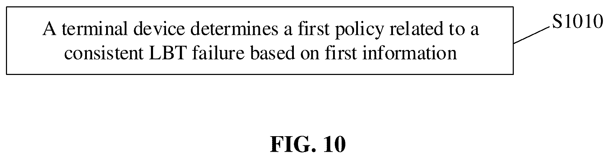

The method for wireless communication provided in an embodiment of the disclosure is described in detail with reference to FIG. 10 below.

As illustrated in FIG. 10, at operation S1010, a terminal device determines a first policy related to a consistent LBT failure.

The terminal device in the embodiment of the present disclosure may be a terminal device that performs sidelink communication.

In some embodiments, detection of the consistent LBT failure may be related to a resource granularity. The resource granularity may include an RB set and/or a resource pool. For example, the terminal device may determine whether the RB set encounters the consistent LBT failure, or the terminal device may determine whether the resource pool encounters the consistent LBT failure.

In some embodiments, the first policy may include one or more of: a resource switching policy, a second policy, and a third policy. The second policy may be related to canceling a triggered consistent LBT failure (a consistent LBT failure status or a consistent LBT failure identification), and the third policy may be related to determining the consistent LBT failure.

The third policy is introduced below firstly.

In some embodiments, the terminal device may detect on the RB set, to determine whether the RB set encounters the consistent LBT failure, or the terminal device may detect on the resource pool, to determine whether the resource pool encounters the consistent LBT failure. The fact that the RB set encounters the consistent LBT failure may also be understood as the consistent

17 **EP 4 676 156 A1** 18

LBT failure occurs on the RB set, and the fact that the resource pool encounters the consistent LBT failure may also be understood as the consistent LBT failure occurs on the resource pool. Examples are given below.

In some embodiments, the third policy may include: determining that a first RB set encounters the consistent LBT failure if a number of LBT failures that occur on a first RB set reaches a first preset threshold within a first preset duration. The third policy may be a policy for determining whether the RB set encounters the consistent LBT failure. The first preset duration and/or a first preset threshold may be indicated by the network device to the terminal device, or indicated by another terminal device to the terminal device, or determined by the terminal device itself, or predefined in the protocol.

In some embodiments, whether the first RB set encounters an LBT failure may be determined by the physical layer of the terminal device, the number of LBT failures occurring on the first RB set may be recorded by the MAC layer of the terminal device. The physical layer of the terminal device may report to the MAC layer of the terminal device when the first RB set encounters the LBT failure, and then the MAC layer of the terminal device records the number of LBT failures occurred on the first RB set. The process that the terminal device determines whether the first RB set encounters the consistent LBT failure will be described in detail below.

When the MAC layer receives indication information that the first RB set encounters the LBT failure indicated by the physical layer and if a first timer corresponding to the first RB set is not started, the MAC layer may start the first timer. The first timer may also be referred to as an LBT failure timer. If the first timer is started, then the first counter corresponding to the first RB set is incremented by 1. The first counter may also be referred to as an LBT failure counter. The MAC layer triggers resource reselection, which is triggered due to the LBT failure, and the reselected resource may be a resource in the current RB set (i.e., the RB set is not switched). Before the first timer expires, if the value recorded by the first counter is greater than or equal to a first preset threshold, it may be determined that the consistent LBT failure occurs on the first RB set. If the value recorded by the first counter is less than the first preset threshold when the first timer expires, the first counter is set to zero.

In some embodiments, if the first RB set encounters the consistent LBT failure, the MAC layer may indicate the consistent LBT failure and/or indicate the RB set that encounters the consistent LBT failure to the physical layer. If the MAC layer indicates the consistent LBT failure to the physical layer, the physical layer may determine the RB set that encounters the consistent LBT failure according to the previously detected RB set.

However, in some embodiments, the physical layer may also determine whether the RB set encounters the consistent LBT failure by itself. The physical layer may also maintain the timer and the counter by itself, and record the number of LBT failures occurring on the RB set, so as to determine whether the RB set encounters the consistent LBT failure.

In some embodiments, the third policy includes: determining that a first resource pool encounters the consistent LBT failure if a number of LBT failures that occur on an RB set associated with the first resource pool reaches a second preset threshold within a second preset duration. The third policy may be a policy for determining whether the resource pool encounters the consistent LBT failure. The second preset duration and/or a second preset threshold may be indicated by the network device to the terminal device, or indicated by another terminal device to the terminal device, or determined by the terminal device itself, or predefined in the protocol.

The RB set associated with the first resource pool may include one or more RB sets. In some implementations, the RB set associated with the first resource pool may mean that some or all of the resources in the RB set belong to resources in the first resource pool.

In some embodiments, whether the RB set associated with the first resource pool encounters the LBT failure may be determined by the physical layer of the terminal device, the number of LBT failures occurring on the first resource pool may be recorded by the MAC layer of the terminal device. The physical layer of the terminal device may report to the MAC layer of the terminal device when the RB set associated with the first resource pool encounters the LBT failure, and then the MAC layer of the terminal device records the number of LBT failures occurred on the RB set associated with the first resource pool. The process that the terminal device determines whether the first resource pool encounters the consistent LBT failure will be described in detail below.

When the MAC layer receives indication information that the RB set associated with the first resource pool encounters the LBT failure indicated by the physical layer, if a second timer corresponding to the first resource pool is not started and the MAC layer may start the second timer. The second timer may also be referred to as an LBT failure timer. If the second timer is started, then the second counter corresponding to the first resource pool is incremented by 1. The second counter may also be referred to as an LBT failure counter. The MAC layer triggers resource reselection, which is triggered due to the LBT failure. Before the second timer expires, if the value recorded by the second counter is greater than or equal to a second preset threshold, it may be determined that the consistent LBT failure occurs on the first resource pool. If the value recorded by the second counter is less than the second preset threshold when the second timer expires, the second counter is set to zero.

However, in some embodiments, the physical layer may also determine whether the resource pool encounters the consistent LBT failure by itself. The physical layer may also maintain the timer and the counter by

10

itself, and record the number of LBT failures occurring on the RB set associated with the resource pool, so as to determine whether the resource pool encounters the consistent LBT failure.

In some embodiments, the fact that the RB set associated with the first resource pool encounters the LBT failure may be that any one of the RB sets associated with the first resource pool encounters the LBT failure, or one or more RB sets associated with the first resource pool encounter the LBT failure. For example, the physical layer performs LBT failure detection on the RB set a for the first time and if the LBT failure on the RB set a is detected, the physical layer indicates the LBT failure to the MAC layer, and the MAC layer increments the second counter by 1. When the LBT failure detection is performed for the second time, the physical layer may detect on the RB set a or the RB set b. Assuming that the physical layer detects on the RB set b and detects that the RB set b encounters the LBT failure, then the physical layer indicates the LBT failure to the MAC. The MAC layer may increment the second counter by 1. In other words, the second counter may not distinguish the RB set that encounters the LBT failure, but may uniformly count for the RB sets corresponding to the first resource pool.

In some embodiments, if the first resource pool encounters the consistent LBT failure, the MAC layer may indicate the consistent LBT failure and/or indicate the resource pool that encounters the consistent LBT failure to the physical layer. If the MAC layer indicates the consistent LBT failure to the physical layer, the physical layer may determine the resource pool that encounters the consistent LBT failure according to the resource pool associated with the previously detected RB set.

The manner for determining whether the RB set encounters the consistent LBT failure is not limited in the embodiments of the present disclosure. In some implementations, if the RB set is associated with a channel, then the RB set is determined to encounter the LBT failure when the channel encounters the LBT failure. In other implementations, if an RB set is associated with multiple channels, the fact that the RB set encounters the LBT failure is related to second information. The second information may include one or more of that: all channels associated with the RB encounter the LBT failure; at least one channel related to the RB set encounters the LBT failure; and a channel on which a resource for data transmission is located encounters the LBT failure. The resource for data transmission may be a resource required by the terminal device to transmit data, or a resource selected by the terminal device, or a resource scheduled by the network device, or the like. The channel on which the resource for data transmission is located may be one or more of the channels associated with the RB set. The above channel may also be referred to as an LBT channel.

For example, if an RB set is associated with multiple channels, the terminal device (or the physical layer of the terminal device) may determine that the RB set encounters the LBT failure when the LBT failure occurs on all of the multiple channels. As another example, if an RB set is associated with multiple channels, the terminal device (or the physical layer of the terminal device) determines that the RB set encounters the LBT failure when the LBT failure occurs on at least one of the multiple channels. That is, as long as the LBT failure occurs on any one of the multiple channels, the terminal device may determine that the RB set encounters the LBT failure. However, in some implementations, the terminal device may determine that the RB set encounters the LBT failure when the LBT failure occurs on a preset number of the channels in the multiple channels. As another example, if the RB set is associated with multiple channels, the terminal device (or the physical layer of the terminal device) determines that the RB set encounters the LBT failure when the LBT failure occurs on a channel on which the resource for data transmission is located.

The channel associated with the RB set is not specifically limited in the embodiments of the present disclosure. For example, some or all of the resources in the channel associated with the RB set belong to the resources in the RB set.

In some embodiments, the second information is related to whether the terminal device is configured with a guardband. The guardband may be a guard band between two channels. For example, if the terminal device is configured with a guardband, the second information may include that all channels associated with the RB set encounter the LBT failure. As another example, if the terminal device is not configured with a guardband, the second information may include that at least one channel associated with the RB set encounters the LBT failure.

**Resource switching policy**

In some implementations, if the terminal device encounters the consistent LBT failure, the terminal device may perform resource switching in order to ensure the transmission performance of the terminal device. The terminal device may perform the resource switching based on the resource switching policy. The resource switching policy may also be referred to as other policies, that is, the resource switching policy may be replaced with other terms, which is not specifically limited in the embodiments of the present disclosure. The resource switching policy is described in detail below.

In an example, the resource switching policy may include one or more of: switching a resource pool, switching an RB set, and switching a time-frequency resource. For example, the terminal device may switch the RB set when the RB set encounters the LBT failure, for example, the terminal device may switch from a first RB set to a second RB set. As another example, the terminal device may switch the resource pool when the RB set encounters the consistent LBT failure, for example, the terminal device may switch from a first resource pool to a second resource pool. The first resource pool may be a resource pool associated with the RB set that encounters the consistent LBT failure. The second resource pool is different from the first resource pool. In some implementations, the second resource pool may be associated with the RB set that encounters the consistent LBT failure or may not be associated with the RB set that encounters the consistent LBT failure. As another example, the terminal device may switch the time-frequency resource when the RB set encounters the consistent LBT failure, for example, the terminal device may switch from a first time-frequency resource to a second time-frequency resource. The first time-frequency resource may be a time-frequency resource associated with the RB set that encounters the consistent LBT failure, for example, the first time-frequency resource may be a resource in the RB set that encounters the consistent LBT failure. The second time-frequency resource may be a resource other than the resource in the RB set that encounters the consistent LBT failure. For example, the first time-frequency resource is a resource in the first RB set, the second time-frequency resource is a resource in the second RB set, and the first RB set is the RB set that encounters the consistent LBT failure. The terminal device (or the MAC layer of the terminal device) may select a resource in the RB set which is not marked as encountering the consistent LBT failure when selecting the time-frequency resource. The above-mentioned resource switching policy may be a policy proposed for the situation that the RB set encounters the consistent LBT failure.

As another example, the resource switching policy may include one or more of: switching a resource pool, and switching a time-frequency resource. For example, the terminal device may switch the resource pool when the resource pool encounters the consistent LBT failure, for example, the terminal device may switch from a first resource pool to a second resource pool. As another example, the terminal device may switch the time-frequency resource when the resource pool encounters the consistent LBT failure, for example, the terminal device may switch from a first time-frequency resource to a second time-frequency resource. The first time-frequency resource may be a time-frequency resource associated with the resource pool that encounters the consistent LBT failure, for example, the first time-frequency resource may be a resource in the resource pool that encounters the consistent LBT failure. The second time-frequency resource may be a resource other than the resource in the resource pool that encounters the consistent LBT failure. For example, the first time-frequency resource is a resource in the first resource pool, the second time-frequency resource is a resource in the second resource pool, and the first resource pool is the resource pool that encounters the consistent LBT failure. The terminal device (or the MAC layer of the terminal device) may select a resource in the RB set which is not marked as encountering the consistent LBT failure when selecting the time-frequency resource. The above-mentioned resource switching policy may be a policy proposed for the situation that the resource pool encounters the consistent LBT failure.

In some embodiments, after the terminal device switches to a new resource pool, the new resource pool may still be associated with the RB set that encounters the consistent LBT failure.

Conditions for the terminal device to switch the resource will be described below.

If the resource switching policy includes switching the resource pool, the terminal device may switch the resource pool when the first condition is satisfied. The first condition may be related to one or more of: whether the RB set encounters the consistent LBT failure; and a data transmission requirement. The data transmission requirement may refer to some requirements related to the transmission resource in the protocol. For example, the data transmission requirement may include a DRX requirement and/or a minimum time interval requirement, etc.

In some embodiments, the consistent LBT failure described above may be the consistent LBT failure that has been triggered but not eliminated.

In some embodiments, the terminal device switches the resource pool when the RB set encounters the consistent LBT failure.

For example, the first condition may include that one or more RB sets associated with the current resource pool encounter the consistent LBT failure, that is, the terminal device switches the resource pool when the one or more RB sets associated with the current resource pool encounter the consistent LBT failure. As another example, the first condition may include that all RB sets associated with the current resource pool encounter the consistent LBT failure, that is, the terminal device switches the resource pool when all the RB sets associated with the current resource pool encounter the consistent LBT failure. As another example, the first condition may include that a preset number of RB sets associated with the current resource pool encounter the consistent LBT failure, that is, the terminal device switches the resource pool when the preset number of RB sets associated with the current resource pool encounter the consistent LBT failure. The preset number may be indicated by the network device or may also be predefined.

In some embodiments, the first condition may include that the number of remaining resources in the resource pool is less than or equal to a preset threshold. The terminal device may switch the resource pool when the number of remaining resources in the resource pool is less than or equal to the preset threshold, that is, no resource, in the resource pool, satisfying the condition can be selected. The remaining resources belong to resources that encounter no consistent LBT failure and/or resources that meet the data transmission requirement. The remaining resources may include time-frequency resources and/or RB resources. That is, a granularity for dividing the resources in the embodiments of the present disclosure may be a time-frequency resource and/or an RB set.

For example, if no resource, in the resource pool, that satisfies the data transmission requirement can be selected other than the resource associated with the RB set that encounters the consistent LBT failure, the terminal device may switch the resource pool.

The switching of the resource pool may be determined by the MAC layer. When the first condition is satisfied, the MAC layer may trigger the resource pool switching or a new resource selection. The MAC layer may indicate the switched resource pool to the physical layer. The switched resource pool is different from the resource pool before switching.

If the number of remaining resources in the resource pool is greater than the preset threshold, that is, a sufficient number of resources in the resource pool can be selected, the MAC layer may transmit the selected resources and the corresponding data packets to be transmitted (such as the MAC protocol data unit (PDU)) to the physical layer.

In some embodiments, if the resource switching policy includes switching the RB set, the terminal device may switch the RB set when a current RB set encounters the consistent LBT failure. The above switching policy is applicable for the situation that the consistent LBT failure occurs on the RB set.

In some embodiments, if the resource switching policy includes switching the time-frequency resource, the terminal device may switch the time-frequency resource when the current RB set encounters the consistent LBT failure. The above switching policy is applicable for the situation that the consistent LBT failure occurs on the RB set.

In some embodiments, if the resource switching policy includes switching the resource pool, the terminal device may switch the resource pool when the current resource pool encounters the consistent LBT failure. The above switching policy is applicable for the situation that the consistent LBT failure occurs on the resource pool.

In some embodiments, if the resource switching policy includes switching the time-frequency resource, the terminal device may switch the time-frequency resource when the current resource pool encounters the consistent LBT failure. The above switching policy is applicable for the situation that the consistent LBT failure occurs on the resource pool.

The time-frequency resource may be a time-frequency resource in the RB set or a time-frequency resource in the resource pool. There are many ways to divide time-frequency resources in the time domain and the frequency domain, which is not specifically limited in the embodiments of the present disclosure. For example, a division granularity of time-frequency resources in the time domain may include a symbol, a slot, a subframe, or the like. The division granularity of time-frequency resources in the frequency domain may include a channel, a subchannel, an RB, a physical resource block (PRB), or the like.

The second policy is introduced below.

In some embodiments, the second policy may include: performing cancellation of the consistent LBT failure, such as canceling the triggered consistent LBT failure of a first resource, when a second condition is satisfied. The second condition may include one or more of that: a first operation is performed by the terminal device, the first operation being related to resource switching; and a consistent LBT failure report is transmitted by the terminal device.

For example, the terminal device may perform the cancellation of the consistent LBT failure when the first operation is performed. As another example, the terminal device may perform the cancellation of the consistent LBT failure when the consistent LBT failure report is transmitted by terminal device. As yet another example, the terminal device may perform the cancellation of the consistent LBT failure when the first operation is performed and the consistent LBT failure report is transmitted.

In some implementations, the operation that the terminal device transmits the consistent LBT failure report may include that the terminal device transmits the consistent LBT failure report to the network device and/or the terminal device transmits the consistent LBT failure report to the peer device.

The first operation is not specifically limited in the embodiments of the present disclosure. For example, the operation may include that the resource switching is performed. As another example, the operation may include that LBT in the switched resource is successful. As another example, the operation may include that data is successfully transmitted in the switched resource. As another example, the first operation may include that an RLF for a unicast link is triggered. It should be noted that the above-described first operations may be used separately or in combination with each other, which is not specifically limited in the embodiments of the present disclosure.

A condition under which the terminal device performs the cancellation of the consistent LBT failure will be described below by way of example.

For example, the terminal device may perform the cancellation of the consistent LBT failure when the resource switching is performed and the data is successfully transmitted in the switched resource. As another example, the terminal device may perform the cancellation of the consistent LBT failure when the resource switching is performed and the LBT in the switched resource is successful. As another example, the terminal device may perform the cancellation of the consistent LBT failure when the RLF for the unicast link is triggered. As another example, the terminal device may perform the cancellation of the consistent LBT failure when the resource switching is performed, the data is successfully transmitted in the switched resource and the consistent LBT failure report is transmitted by the terminal device.

As another example, the terminal device may perform the cancellation of the consistent LBT failure when the resource switching is performed, the LBT in the switched resource is successful and the consistent LBT failure report is transmitted by the terminal device. As another example, the terminal device may perform the cancellation of the consistent LBT failure when the RLF for the unicast link is triggered and the consistent LBT failure report is transmitted by the terminal device.

The operation of triggering the RLF for the unicast link may include one or more of that: LBT in the switched target resource is not successful; the consistent LBT failure is triggered for the switched target resource; and data is not successfully transmitted in the switched target resource. The target resource may be all configured resources or a preset number of resources. The configured resources may be resources configured by the network device. The target resource may include a resource pool and/or an RB set.

For example, if the terminal device has traversed all configured resource pools or RB sets, but no LBT is successful or no data is successfully transmitted, the RLF for the unicast link is triggered. As another example, if the terminal device has performed N resource switchings, but no LBT is successful or no data is successfully transmitted, the RLF for the unicast link is triggered. The above number N may be configured by the network device or predefined in the protocol. The above-mentioned resource switching may include one or more of: switching the resource pool, switching the RB set, and switching the time-frequency resource. As another example, if the consistent LBT failure is triggered for all of the configured resources, or the consistent LBT failure is triggered for N of the configured resources, the RLF for the unicast link is triggered.

The first resource is not specifically limited in the embodiments of the present disclosure. For example, the first resource may include one or more of: an RB set associated with one or more resource pools before switching; an RB set before switching; and a resource pool before switching.

In some embodiments, the first resource may include the RB set associated with one or more resource pools before switching. For example, if the RB set encounters the consistent LBT failure and the terminal device switches the resource pool, the first resource may include the RB set associated with one or more resource pools before switching. The one or more resource pools may be one or more resource pools associated with the RB set that encounters the consistent LBT failure.

In some embodiments, the first resource may include the one or more RB sets before switching. For example, if the RB set encounters the consistent LBT failure and the terminal device switches the RB set, the first resource may include one or more RB sets before switching. The one or more RB sets may be one or more RB sets that encounter the consistent LBT failure.

In some embodiments, the first resource may include the one or more resource pools before switching. For example, if the resource pool encounters the consistent LBT failure and the terminal device switches the resource pool, the first resource may include one or more resource pools before switching. The one or more resource pools may be one or more resource pools that encounter the consistent LBT failure.

In some embodiments, if the second condition includes that the RLF for the unicast link is triggered, the first resource may include the above-mentioned target resource.

In some embodiments, if the first condition includes that the consistent LBT failure report is transmitted by the terminal device, the first resource includes a resource corresponding to the transmitted consistent LBT failure.

A specific situation under which the terminal device performs the cancellation of the triggered consistent LBT failure will be described below by way of example.

In some embodiments, the terminal device may cancel the consistent LBT failure on the RB set associated with one or more resource pools before switching when the resource pool switching is performed or a new resource selection is triggered. Alternatively, the terminal device may cancel the consistent LBT failure on the RB set associated with one or more resource pools before switching when the resource pool switching is performed and the LBT in the new resource pool is successful or the data is successfully transmitted in the new resource pool.

In some embodiments, the terminal device may trigger the RLF for the unicast link and cancel the consistent LBT failure on the RB set associated with all configured resource pools when no LBT on all the resource pools is successful or no data is successfully transmitted on all the resource pools or the consistent LBT failure occurs on all the resource pools. Alternatively, the terminal device may trigger the RLF for the unicast link and cancel the consistent LBT failure on the RB set associated with a preset number of resource pools when no LBT on the preset number of resource pools is successful or no data is successfully transmitted on the preset number of resource pools.

In some embodiments, the terminal device may cancel the consistent LBT failure on one or more RB sets before switching when the RB set encounters the consistent LBT failure and the RB set is switched or a new resource selection is triggered. Alternatively, the terminal device may cancel the consistent LBT failure on one or more RB sets before switching when the RB set is switched and the LBT on the switched RB set is successful or the data is successfully transmitted in the switched RB set.

In some embodiments, the terminal device may trigger the RLF for the unicast link and cancel the consistent LBT failure on all RB sets when the RB set encounters the consistent LBT failure and no LBT on all the configured RB sets is successful or no data is successfully transmitted on all the configured RB sets or the consistent LBT failure occurs on all the configured RB sets. Alternatively, the terminal device may trigger the RLF for the unicast link and cancel the consistent LBT failure on a preset number of RB sets when no LBT on the preset number of RB sets is successful or no data is successfully transmitted on the preset number of RB sets.

In some embodiments, the terminal device may cancel the consistent LBT failure on the RB set associated with one or more resource pools before switching when the resource pool encounters the consistent LBT failure, and the resource pool is switched or a new resource selection is triggered. Alternatively, the terminal device may cancel the consistent LBT failure on the RB set associated with one or more resource pools before switching when the resource pool is switched and the LBT in the new resource pool is successful or the data is successfully transmitted in the new resource pool.

In some embodiments, the terminal device may trigger the RLF for the unicast link and cancel the consistent LBT failure on all resource pools when the resource pool encounters the consistent LBT failure and no LBT on all the configured resource pools is successful or no data is successfully transmitted on all the configured resource pools or the consistent LBT failure occurs on all the configured resource pools. Alternatively, the terminal device may trigger the RLF for the unicast link and cancel the consistent LBT failure on a preset number of resource pools when no LBT on the preset number of resource pools is successful or no data is successfully transmitted on the preset number of resource pools.

The above-mentioned operation of canceling the consistent LBT failure may be performed by the MAC layer. In some embodiments, the MAC layer may transmit first indication information to the physical layer, the first indication information being configured to indicate cancellation of the consistent LBT failure and/or a resource for which the consistent LBT failure is canceled. For example, the first indication information may be used to indicate cancellation of the consistent LBT failure, and the physical layer, after receiving the first indication information, may determine which resource has the consistent LBT failure status to cancel according to the LBT failure indication previously reported to the MAC layer. As another example, the first indication information may be configured to indicate the resource for which the consistent LBT failure is canceled, that is, the first indication information may directly indicate the resource for which the consistent LBT failure status is canceled. The resource herein may include the RB set and/or the resource pool.

## Resource allocation

In some embodiments, the selected resource for data transmission of the terminal device is determined based on second indication information. The selected resource may be, for example, a resource for the data transmission. The second indication information may indicate one or more of the following parameters: information of a target resource pool, the information of a target resource pool being determined based on information related to the consistent LBT failure; and information related to a target RB set.

In some embodiments, the second indication information may be transmitted by the MAC layer to the physical layer. For example, the MAC layer may indicate the second indication information to the physical layer in a process of triggering the physical layer to perform resource selection. In some implementations, when the MAC layer indicates the information of the target resource pool to the physical layer, the MAC layer may consider information of the resource on which the consistent LBT failure occurs. In other implementations, the MAC layer may also directly indicate the information related to the RB set to the physical layer.

In some embodiments, the target resource pool may be associated with at least one RB set or resource pool for which no consistent LBT failure is triggered. That is, at least one resource in the target resource pool is an available resource. For example, at least one resource in the target resource pool belongs to a resource in an RB set that encounters no consistent LBT failure.

In some embodiments, the target resource pool includes at least one resource pool for which no consistent LBT failure is triggered.

It is noted that, in addition to the scenarios described in the embodiments of the present disclosure, information of the resource of the consistent LBT failure may also be considered for the resource selection in the unlicensed frequency band triggered by other cases.

In some embodiments, the target RB set may include one or more of: a selected RB set; and an RB set that encounters the consistent LBT failure. In some implementations, the selected RB set may be an RB set that is selected based on the RB set or the resource pool that encounters the consistent LBT failure. For example, the selected RB set may not include the RB set that encounters the consistent LBT failure. As another example, the selected RB set may not include the RB set associated with the resource pool that encounters the consistent LBT failure. The above selected RB set is applicable for the situation that the consistent LBT failure occurs on the RB set.

In some embodiments, the second indication information may indicate one or more of the following parameters: the information of the target resource pool, the information of the selected RB set; and the RB set that encounters the consistent LBT failure. The above second indication information is applicable for the situation that the consistent LBT failure occurs on the RB set. The second indication information may indicate one or more of the following parameters: the information of the target resource pool, the information of the selected RB set. The above second indication information is applicable for the situation that the consistent LBT failure occurs on the resource pool.

In some embodiments, the second indication information may further include one or more of: information related to data transmission, information of a currently available channel occupancy time (COT), received inter-UE cooperation information, SL DRX information, and the like. The information related to data transmission may include one or more of: a required resource size, a number of retransmissions, a priority, and the like. The information of the available COT may include information related to COT time, such as a remaining duration, a starting time, an ending time, and the like.

The manner for determining the above selected resource is described below. In some embodiments, the selected resource may be transmitted by the MAC layer to the physical layer. The selected resource may be determined by the MAC layer based on a second resource, and the second resource is determined by the physical layer through resource selection based on the second indication information.

In some embodiments, the physical layer may perform the resource selection according to the second indication information. When the physical layer performs the resource selection, the physical layer may select a resource according to the manner of the resource sensing described above. In some implementations, the physical layer may exclude unavailable resources to obtain an available resource set A.

In some embodiments, the second resource may be determined based on one or more of the following resources: a resource in a target resource pool, a resource in the selected RB set, an RB set excluding the consistent LBT failure.

In some implementations, if the parameter indicated by the second indication information includes the target resource pool information, the set A may be a resource set obtained according to the target resource pool. For example, the physical layer may perform the resource sensing on resources in the target resource pool to obtain the set A. If the parameter indicated by the second indication information includes the selected RB set, the set A may be a resource set obtained according to the selected RB set. For example, the physical layer may perform the resource sensing on resources in the selected RB set to obtain the set A. If the parameter indicated by the second indication information includes the RB set that encounters the consistent LBT failure, the set A may be a resource set obtained by excluding the RB set that encounters the consistent LBT failure.

The above embodiments may be used separately or in combination with each other. For example, the physical layer may perform the resource sensing on the resources in the target resource pool and exclude the RB set that encounters the consistent LBT failure, to obtain the resource set A. For example, the physical layer may perform the resource sensing on the resources in the selected RB set and exclude the RB set that encounters the consistent LBT failure, to obtain the resource set A. The RB set that encounters the consistent LBT failure may be determined by the physical layer according to the previous LBT detection result, or may be indicated by the second indication information.

In some embodiments, the physical layer may report the resource set A to the MAC layer. The MAC layer may perform the resource selection according to the resource set A reported by the physical layer.

In some embodiments, the MAC layer may select a resource in the resource set A, for example, the MAC layer may select a resource in the RB set which is not marked as encountering the consistent LBT failure. However, if the physical layer has excluded resources on the RB set that encounters the consistent LBT failure when determining the resource set A, the MAC layer may directly select a resource in the resource set A. Further, as described above, if the MAC layer is able to select sufficient resources in the resource set A, the MAC layer may transmit the selected resources (which may also be referred to as resources to be transmitted) and corresponding data packets to be transmitted to the physical layer. If the MAC layer is not able to select sufficient resources, in the resource set A, that satisfy the condition, the MAC layer may trigger the resource pool switching or a new resource selection. For example, the MAC layer may indicate the switched resource pool to the physical layer. The physical layer may perform the resource re-selection based on the switched resource pool. The above operation may be applicable for the situation that the consistent LBT failure occurs on the RB set and the terminal device switches the RB set.

In some embodiments, the MAC layer may select a resource in the resource set A, for example, the MAC layer may select a resource in the RB set which is not marked as encountering the consistent LBT failure. If the MAC layer is able to select sufficient resources in the resource set A, the MAC layer may transmit the selected resources (which may also be referred to as resources to be transmitted) and corresponding data packets to be transmitted to the physical layer. The above operation may be applicable for the situation that the consistent LBT failure occurs on the RB set and the terminal device switches the resource pool.

In some embodiments, the MAC layer may select the resources in the resource set A and may transmit the selected resources (which may also be referred to as resources to be transmitted) and the corresponding data packets to be transmitted to the physical layer. The above operation may be applicable for the situation that the consistent LBT failure occurs on the resource pool and the terminal device switches the resource pool.

Before transmitting the data packet to be transmitted, the physical layer may perform LBT detection on the resource to be transmitted indicated by the MAC layer. If the LBT is successful, the physical layer transmits the data packet to be transmitted; and if the LBT fails, the LBT failure and/or the RB set in which the LBT fails are indicated to the MAC layer. Further, as described above, the MAC layer may count and time the RB set that encounters the LBT failure according to the indication from the physical layer, to determine whether the consistent LBT failure is triggered for the RB set.

In some embodiments, when the RB set encounters the consistent LBT failure, the MAC layer may trigger a new resource selection. For example, the MAC layer may indicate a resource pool to the physical layer, and the resource pool may be the same as the previous resource pool (i.e., the reselected resource is in another available RB set in the current resource pool, the resource pool is not switched), or may be different from the previous resource pool (i.e., the reselected resource is in another available RB set in another resource pool, the resource pool is a switched resource pool).

The new resource selection process may be a resource selection process triggered by the consistent LBT on a single RB set. The resource selection may be the resource selection performed in the current resource pool (if there is still an RB set, in the current resource pool, for which the consistent LBT failure is not triggered), or the resource selection may be the resource selection performed in another resource pool. The specific resource pool in which the resource selection is performed may be determined by the implementation of the terminal device.

In some embodiments, when the RB set encounters the consistent LBT failure, the MAC layer may trigger the new resource selection. The MAC layer may indicate the new RB set to the physical layer, the new RB set being a switched RB set.

It is noted that, in an embodiment of the present disclosure, the RB set that encounters the consistent LBT failure may be an RB set for which the consistent LBT failure is triggered but not canceled, and the resource pool that encounters the consistent LBT failure may be a resource pool for which the consistent LBT failure is triggered but not canceled.

Hereinafter, the solutions of the embodiments of the present disclosure will be described in detail with reference to three examples. It is noted that the following three examples are only for convenience of understanding and introduction of the present disclosure, which are not intended to limit the present disclosure. Further, the following three examples may be used in combination with each other without conflict.

**First example**

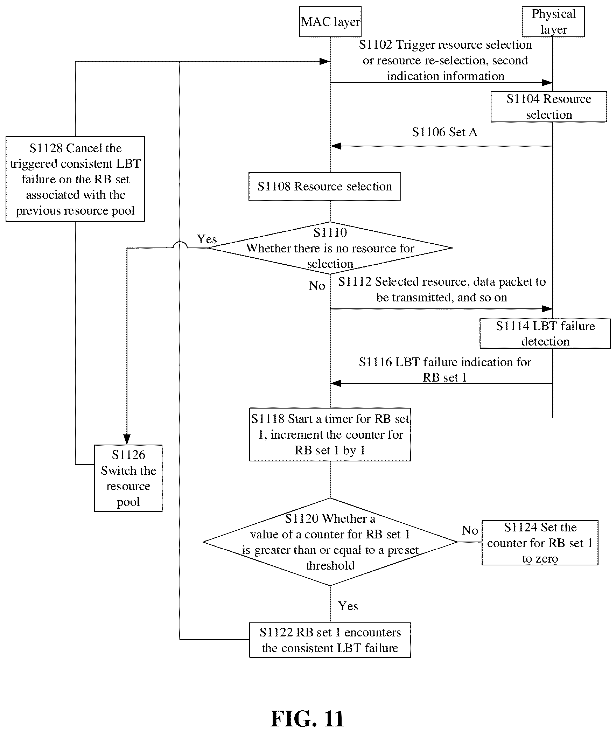

FIG. 11 illustrates a case that the consistent LBT occurs on the RB set and the resource switching policy is switching the resource pool. For example, when all resources in a resource pool are marked as encountering the consistent LBT failure, the resource pool is switched.

With reference to FIG. 11, at operation S1102, an MAC layer triggers resource selection or resource reselection. The MAC layer triggers a physical layer to perform the resource selection, and the MAC layer may transmit second indication information to the physical layer while triggering.

The second indication information may indicate one or more of the following parameters: information related to data transmission, information of a currently available COT, received inter-UE cooperation (IUC) information, SL DRX information, information of a target resource pool, information of a selected RB set, information of an RB set that encounters the consistent LBT failure, and so on. The information related to data transmission may include one or more of: a required resource size, a number of retransmissions, a priority, and the like. The information of the available COT may include information related to COT time, such as a remaining duration, a starting time, an ending time, and the like. The information of the target resource pool may be determined based on the RB set that encounters the consistent LBT failure. The resource pool selected by the MAC layer may need to be associated with at least one RB set for which no consistent LBT failure is triggered. The selected RB set may consider the RB set for which the consistent LBT failure is triggered, that is, the selected RB set may exclude the RB set for which the consistent LBT failure is triggered but not canceled.

At operation S1104, the physical layer performs resource selection. The physical layer may perform the resource selection according to the second indication information, and exclude the unavailable resource, to obtain an available resource set A.

If the second indication information indicates a target resource pool, the resource set A may be obtained based on resources in the target resource pool. If the second indication information indicates the selected RB set, the resource set A may be obtained based on resources in the selected RB set. If the second indication information indicates a resource that encounters the consistent LBT failure, the resource set A may be obtained by excluding the RB set that encounters the consistent LBT failure.

At operation S1106, the physical layer reports the resource set A to the MAC layer.

At operation S1108, the MAC layer performs resource selection according to the resource set A reported by the physical layer.

When performing the resource selection, the MAC layer may consider the RB set for which the consistent LBT failure is triggered bot not canceled. Specifically, the MAC layer may select a resource (or referred to be as a time-frequency resource) in the RB set which is not marked as encountering the consistent LBT failure. It can be understood that after the terminal device switches to a new resource pool, the new resource pool may still be associated with the RB set that encounters the consistent LBT failure, and in this case, it is also necessary to consider the RB set that encounters the consistent LBT failure when performing the resource selection.

At operation S1110, the MAC layer determines whether there is no resource available for selection. For example, the MAC layer may determine whether sufficient resources satisfying the condition are available for selection. If the MAC layer is able to select sufficient resources satisfying the condition, the operation S1112 is performed; if the MAC layer is not able to select the sufficient resources satisfying the condition, the operations S1114 and S1116 are performed.

At operation S1112, the MAC layer may transmit information related to transmission, such as the selected resource and the data packet to be transmitted (such as MAC PDU), to the physical layer.

At operation S1114, the physical layer may perform LBT detection on the resource selected by the MAC layer before data transmission. If the LBT is successful, the data is transmitted; if the LBT fails, the operation S1116 is performed.

At operation S1116, the physical layer transmits an LBT failure indication to the MAC layer. Taking RB set 1 as an example, the physical layer may transmit the LBT failure indication of the RB set 1 to the MAC layer.

If the RB set 1 is associated with multiple channels, the LBT failure indication of the RB set 1 may be transmitted in at least one of the following cases: all the channels encountering the LBT failure; at least one channel encountering the LBT failure; and a channel on which a resource for data transmission is located encountering the LBT failure. The specific case for transmitting the LBT failure indication of the RB set 1 depends on whether the terminal device is configured with a guardband. If the terminal device is configured with the guardband, the LBT failure indication of the RB set 1 may be transmitted in the case that all channels encounter the LBT failure. If the terminal device is not configured with the guardband, the LBT failure indication of RB set 1 may be transmitted in the case that at least one channel encounters the LBT failure.

At operation S1118, after receiving the LBT failure indication of the RB set 1, the MAC layer starts a timer for the RB set 1 if the timer for the RB set 1 is not started; and the MAC layer increments a counter for the RB set 1 by 1 if the timer for the RB set 1 is started.

In addition, the MAC layer may also trigger the resource reselection. The resource reselection is a resource reselection that is triggered by the LBT failure.

At operation S1120, when the timer for the RB set 1 expires, it is determined whether a value of a counter for the RB set 1 is greater than a preset threshold.

At operation S1122, if the value of the counter for the RB set 1 is greater than the preset threshold, it is determined that the RB set 1 encounters the consistent LBT failure.

The MAC layer may trigger a new resource selection. For example, the process may return to the operation S1102 for re-execution. The MAC layer may re-indicate a resource pool to the physical layer, the physical layer may be the previous resource pool (i.e., the current resource pool) or may be a new resource pool.

This new resource selection may be a resource selection triggered by the consistent LBT failure occurring on a single RB set. If there is still an RB set, associated with the current resource pool, for which the consistent LBT failure is not triggered, the resource selection may be performed in the current resource pool, or the resource selection may be performed in another resource pool.

At operation S1124, when the timer for the RB set 1 expires and if the value of the counter for the RB set 1 does not reach the preset threshold, the counter for the RB set 1 is set to zero.

At operation S1126, the MAC layer may trigger the resource pool switching or a new resource selection. For example, the process may return to the operation S1102 for re-execution. The MAC layer may re-indicate a resource pool to the physical layer, the resource pool is a switched resource pool and is different from the previous resource pool.

At operation S1128, after the resource pool is switched, the MAC layer may cancel the consistent LBT failure, on the RB set, that is triggered but not canceled.

If the new resource selection or resource pool switching is triggered and the LBT in the new resource pool is successful or data is successfully transmitted in the new resource pool, the terminal device may cancel the consistent LBT failure, on the RB set associated with one or more resource pools before switching, that is triggered but not canceled.

If the terminal device has traversed all configured resource pools but still fails to successfully perform the LBT or fails to successfully transmit all the data, the terminal device may trigger the RLF for all unicast links and cancel all the consistent LBT failures, on the RB sets, that are triggered but not canceled.

If the terminal device has performed N switchings (i.e., reaching the configured number) but still fails to successfully perform the LBT or fails to successfully transmit all the data, the terminal device may trigger the RLF for all unicast links and cancel all the consistent LBT failures, on the RB sets, that are triggered but not canceled.

If the terminal device is in a radio resource control (RRC) connected state, the terminal device in the connected state may transmit a consistent LBT failure report, such as transmitting the consistent LBT failure report to the network device or the peer device. Further, when the terminal device transmits the consistent LBT failure report, the terminal device may also trigger a cancellation operation of the consistent LBT failure. That is, the terminal device may trigger the cancellation operation of the consistent LBT failure when resource switching is performed, or may trigger the cancellation operation of the consistent LBT failure when the consistent LBT failure report is transmitted. Therefore, it is necessary to specify how the two cancellation operations of the consistent LBT failure are performed.

On such basis, there is proposed that the terminal device may trigger the cancellation operation of the consistent LBT failure only after performing the above two operations in an embodiment of the present disclosure. For example, for a triggered consistent LBT failure on the RB set, the terminal device may trigger the cancellation operation of the consistent LBT failure only after transmitting the consistent LBT failure report for the RB set and performing the resource pool switching. Alternatively, the terminal device may trigger the cancellation operation of the consistent LBT failure after performing any one of the above two operations. For example, the terminal device may select to transmit the consistent LBT failure report or switch the resource pool, and trigger the cancellation operation of the consistent LBT failure after the corresponding operation is achieved.

After triggering the cancellation operation of the consistent LBT failure, the MAC layer may indicate, to the physical layer, the cancellation of the consistent LBT failure or the RB set for which the consistent LBT failure is canceled.

## Second example

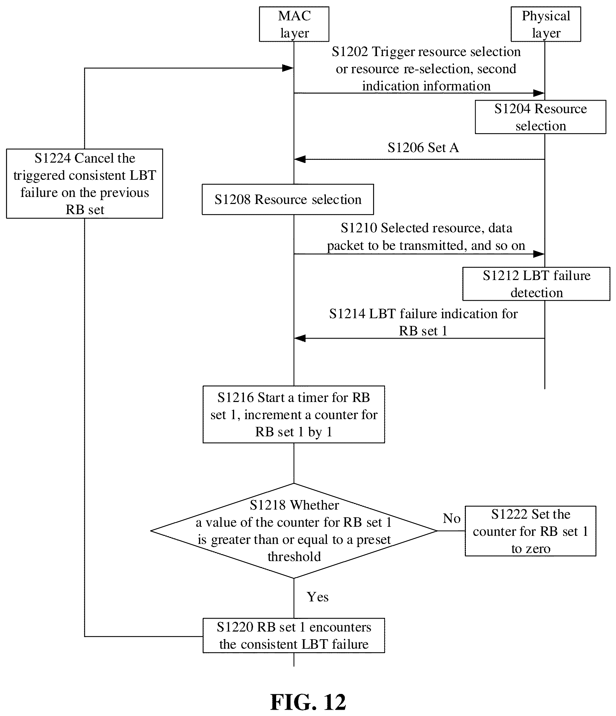

FIG. 12 illustrates a case that the consistent LBT occurs on the RB set and the resource switching policy is switching the RB set. For example, when some RB set is marked as encountering the consistent LBT failure, the RB set is switched.

With reference to FIG. 12, at operation S 1202, an MAC layer triggers resource selection or resource reselection. The MAC layer triggers a physical layer to perform the resource selection, and the MAC layer may transmit second indication information to the physical layer while triggering.

The second indication information may indicate one or more of the following parameters: information related to data transmission, information of a currently available COT, received inter-UE cooperation (IUC) information, SL DRX information, information of a target resource pool, information of a selected RB set, information of an RB set that encounters the consistent LBT failure. The information related to data transmission may include one or more of: a required resource size, a number of retransmissions, a priority, and the like. The information of the available COT may include information related to COT time, such as a remaining duration, a starting time, an ending time, and the like. The information of the target resource pool may be determined based on the RB set that encounters the consistent LBT failure. The resource pool selected by the MAC layer may need to be associated with at least one RB set for which no consistent LBT failure is triggered. The selected RB set may considere the RB set for which the consistent LBT failure is triggered, that is, the selected RB set may exclude the RB set for which the consistent LBT failure is triggered but not canceled.

At operation S1204, the physical layer performs resource selection. The physical layer may perform the resource selection according to the second indication information, and exclude the unavailable resource, to obtain an available resource set A.

If the second indication information indicates a target resource pool, the resource set A may be obtained based on resources in the target resource pool. If the second indication information indicates the selected RB set, the resource set A may be obtained based on resources in the selected RB set. If the second indication information indicates a resource that encounters the consistent LBT failure, the resource set A may be obtained by excluding the RB set that encounters the consistent LBT failure.

At operation S1206, the physical layer reports the resource set A to the MAC layer.

At operation S1208, the MAC layer performs resource selection according to the resource set A reported by the physical layer.

At operation S1210, if the MAC layer is able to select sufficient resources that satisfy the condition, the MAC layer may transmit information related to transmission, such as the selected resource and the data packet to be transmitted (such as MAC PDU), to the physical layer.

At operation S1212, the physical layer may perform LBT detection on the resource selected by the MAC layer before data transmission. If the LBT is successful, the data is transmitted; if the LBT fails, the operation S11214 is performed.

At operation S1214, the physical layer transmits an LBT failure indication to the MAC layer. Taking RB set 1 as an example, the physical layer may transmit the LBT failure indication of the RB set 1 to the MAC layer.

If the RB set 1 is associated with multiple channels, the LBT failure indication of RB set 1 may be transmitted in at least one of the following cases: all the channels encountering the LBT failure; at least one channel encountering the LBT failure; and a channel on which a resource for data transmission is located encountering the LBT failure. The specific situation for transmitting the LBT failure indication of the RB set 1 depends on whether the terminal device is configured with a guardband. If the terminal device is configured with the guardband, the LBT failure indication of the RB set 1 may be transmitted in the case that all channels encounter the LBT failure. If the terminal device is not configured with the guardband, the LBT failure indication of RB set 1 may be transmitted in the case that at least one channel encounters the LBT failure.

At operation S1216, after receiving the LBT failure indication of the RB set 1, the MAC layer starts a timer for the RB set 1 if the timer for the RB set 1 is not started; and the MAC layer increments a counter for the RB set 1 by 1 if the timer for the RB set is started.

In addition, the MAC layer may also trigger resource reselection. The resource reselection is a resource reselection that is triggered by the LBT failure.

The MAC layer indicates the consistent LBT failure and/or the RB set that encounters the consistent LBT failure to the physical layer.

At operation S1218, when the timer for the RB set 1 expires, it is determined whether a value of a counter for the RB set 1 is greater than a preset threshold.

At operation S1220, if the value of the counter for the RB set 1 is greater than the preset threshold, it is determined that the RB set 1 encounters the consistent LBT failure.

The MAC layer may trigger a new resource selection. For example, the process may return to the operation S1202 for re-execution. The MAC layer may re-indicate a resource pool to the physical layer, the physical layer may be the previous resource pool (i.e., the current resource pool) or may be a new resource pool.

This new resource selection may be a resource selection triggered by the consistent LBT failure occurring on a single RB set. If there is still an RB set, associated with the current resource pool, for which the consistent LBT failure is not triggered, the resource selection may be performed in the current resource pool, or the resource selection may be performed in another resource pool.

At operation S1222, when the timer for the RB set 1 expires and if the value of the counter for the RB set 1 does not reach the preset threshold, the counter for the RB set 1 is set to zero.

If the RB set 1 encounters the consistent LBT failure, the MAC layer triggers RB set switching or a new resource selection. For example, the process may return to the operation S1202 for re-execution. The MAC layer may indicate a new RB set to the physical layer, and the new RB set may be the switched RB set.

At operation S1224, after the resource pool is switched, the MAC layer may cancel the triggered consistent LBT failure on the previous RB set.

If the LBT on the new resource or RB set is successful, the MAC layer may cancel the triggered consistent LBT failure on the previous RB set. Alternatively, if the data transmission on the new resource or RB set is successful, the MAC layer may cancel the triggered consistent LBT failure on the previous RB set.

If the terminal device has traversed all configured RBs but still fails to successfully perform the LBT or fails to successfully transmit all the data, the terminal device may trigger the RLF for the unicast link and cancel all the consistent LBT failures, on the RB sets, that are triggered but not canceled.

If the terminal device has performed N switchings (i.e., reaching the configured number) but still fails to successfully perform the LBT or fails to successfully transmit all the data, the terminal device may trigger the RLF for all unicast links and cancel all the consistent LBT failures, on the RB sets, that are triggered but not canceled.

If the terminal device is in the RRC connected state, the terminal device in the connected state may transmit a consistent LBT failure report, such as transmitting the consistent LBT failure report to the network device or the peer device. Further, when the terminal device transmits the consistent LBT failure report, the terminal device may also trigger a cancellation operation of the consistent LBT failure. That is, the terminal device may trigger the cancellation operation of the consistent LBT failure when resource switching is performed, or may trigger the cancellation operation of the consistent LBT failure when the consistent LBT failure report is transmitted. Therefore, it is necessary to specify how the two cancellation operations of the consistent LBT failure are performed.

On such basis, there is proposed that the terminal device may trigger the cancellation operation of the consistent LBT failure only after performing the above two operations in an embodiment of the present disclosure. For example, for a triggered consistent LBT failure on the RB set, the terminal device may trigger the cancellation operation of the consistent LBT failure only after transmitting the consistent LBT failure report for the RB set and performing the resource pool switching. Alternatively, the terminal device may trigger the cancellation operation of the consistent LBT failure after performing any one of the above two operations. For example, the terminal device may select to transmit the consistent LBT failure report or switch the resource pool, and trigger the cancellation operation of the consistent LBT failure after the corresponding operation is achieved.

After triggering the cancellation operation of the consistent LBT failure, the MAC layer may indicate, to the physical layer, the cancellation of the consistent LBT failure or the the RB set for which the consistent LBT failure is canceled.

**Third example**

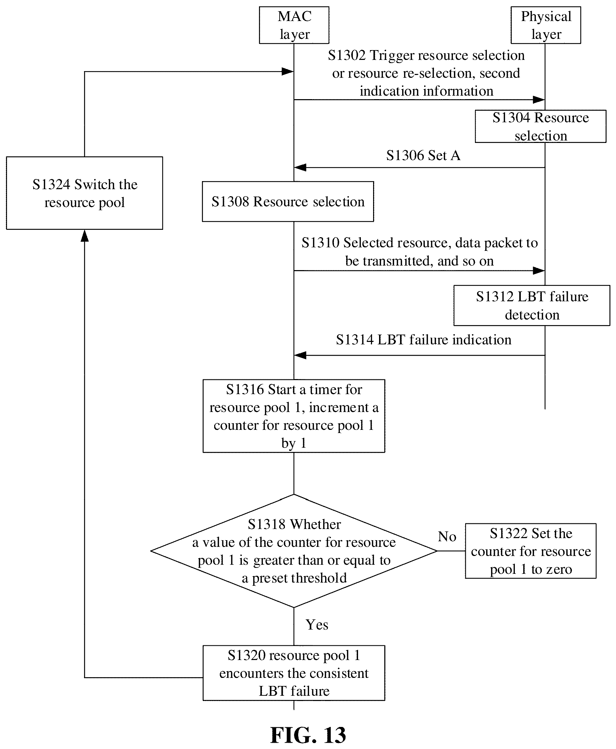

FIG. 13 illustrates a case that the consistent LBT occurs on the resource pool and the resource switching policy is switching the resource pool set. For example, when some resource pool is marked as encountering the consistent LBT failure, the resource pool is switched. When an RB set associated with some resource pool is indicated to encounter an LBT failure, a counter corresponding to the resource pool is incremented by 1, and when the number of LBT failures consecutively occurring on the resource pool is greater than a preset threshold, the resource pool is switched.

With reference to FIG. 13, at operation S 1302, an MAC layer triggers resource selection or resource reselection. The MAC layer triggers a physical layer to perform the resource selection, and the MAC layer may transmit second indication information to the physical layer while triggering.

The second indication information may indicate one or more of the following parameters: information related to data transmission, information of a currently available COT, received IUC information, SL DRX information, information of a target resource pool, information of a selected RB set, and so on. The information related to data transmission may include one or more of: a required resource size, a number of retransmissions, a priority, and the like. The information of the available COT may include information related to COT time, such as a remaining duration, a starting time, an ending time, and the like. The information of the target resource pool may be determined based on the RB set that encounters the consistent LBT failure. The resource pool selected by the MAC layer may need to be associated with at least one RB set for which no consistent LBT failure is triggered.

At operation S1304, the physical layer performs resource selection. The physical layer may perform the resource selection according to the second indication information, and exclude the unavailable resource, to obtain an available resource set A.

If the second indication information indicates a target resource pool, the resource set A may be obtained based on resources in the target resource pool. If the second indication information indicates the selected RB set, the resource set A may be obtained based on resources in the selected RB set.

At operation S1306, the physical layer reports the resource set A to the MAC layer.

At operation S1308, the MAC layer performs resource selection according to the resource set A reported by the physical layer.

At operation S1310, the MAC layer may transmit information related to transmission, such as the selected resource and the data packet to be transmitted (such as MAC PDU), to the physical layer.

At operation S1312, the physical layer may perform LBT detection on the resource selected by the MAC layer before data transmission. If the LBT is successful, the data is transmitted; if the LBT fails, the operation S1316 is performed.

At operation S1314, the physical layer transmits an LBT failure indication to the MAC layer.

Taking the RB set 1 as an example, if the RB set 1 is associated with multiple channels, the LBT failure indication of the RB set 1 may be transmitted in at least one of the following cases: all the channels encountering the LBT failure; at least one channel encountering the LBT failure; and a channel on which a resource for data transmission is located encountering the LBT failure. The specific case for transmitting the LBT failure indication of the RB set 1 depends on whether the terminal device is configured with a guardband. If the terminal device is configured with the guardband, the LBT failure indication of the RB set 1 may be transmitted in the case that all channels encounter the LBT failure. If the terminal device is not configured with the guardband, the LBT failure indication of RB set 1 may be transmitted in the case that at least one channel encounters the LBT failure.

At operation S1316, after receiving the LBT failure indication, the MAC layer starts a timer for the resource pool 1 if the timer for the resource pool 1 is not started; and the MAC layer increments the counter for the resource pool by 1 if the timer for the resource pool 1 is started.

In addition, the MAC layer may also trigger resource reselection. The resource reselection is a resource reselection that is triggered by the LBT failure.

The MAC layer indicates the consistent LBT failure and/or the resource pool that encounters the consistent LBT failure to the physical layer.

At operation S1318, when the timer for the resource pool 1 expires, it is determined whether a value of a counter for the resource pool 1 is greater than a preset threshold.

At operation S1320, if the value of the counter for the resource pool 1 is greater than the preset threshold, it is determined that the resource pool 1 encounters the consistent LBT failure.

At operation S1322, when the timer for the resource pool 1 expires and if the value of the counter for the resource pool 1 does not reach the preset threshold, the counter for the resource pool 1 is set to zero.

If the resource pool 1 encounters the consistent LBT failure, the MAC layer triggers resource pool switching or a new resource selection. For example, the process may return to the operation S1302 for re-execution. The MAC layer may re-indicate a resource pool to the physical layer, the resource pool may be the switched resource pool.

At operation S1324, after the resource pool is switched, the MAC layer may cancel the triggered consistent LBT failure on the previous resource pool.

If the LBT on the new resource or resource pool is successful, the MAC layer may cancel the triggered consistent LBT failure on the previous resource pool. Alternatively, if the data transmission on the new resource or resource pool is successful, the MAC layer may cancel the triggered consistent LBT failure on the previous resource pool.

If the terminal device has traversed all configured resource pools but still fails to successfully perform the LBT or fails to successfully transmit all the data, the terminal device may trigger the RLF for the unicast link and cancel all the consistent LBT failures, on the resource pools, that are triggered but not canceled.

If the terminal device has performed N switchings (i.e., reaching the configured number) but still fails to successfully perform the LBT or fails to successfully transmit all the data, the terminal device may trigger the RLF for all unicast links and cancel all the consistent LBT failures, on the resource pools, that are triggered but not canceled.

If the terminal device is in the RRC connected state, the terminal device in the connected state may transmit a consistent LBT failure report, such as transmitting the consistent LBT failure report to the network device or the peer device. Further, when the terminal device transmits the consistent LBT failure report, the terminal device may also trigger a cancellation operation of the consistent LBT failure. That is, the terminal device may trigger the cancellation operation of the consistent LBT failure when resource switching is performed, or may trigger the cancellation operation of the consistent LBT failure when the consistent LBT failure report is transmitted. Therefore, it is necessary to specify how the two cancellation operations of the consistent LBT failure are performed.

On such basis, there is proposed that the terminal device may trigger the cancellation operation of the consistent LBT failure only after performing the above two operations in an embodiment of the present disclosure. For example, for a triggered consistent LBT failure on the resource pool, the terminal device may trigger the cancellation operation of the consistent LBT failure only after transmitting the consistent LBT failure report for the resource pool and performing the resource pool switching. Alternatively, the terminal device may trigger the cancellation operation of the consistent LBT failure after performing any one of the above two operations. For example, the terminal device may select to transmit the consistent LBT failure report or switch the resource pool, and trigger the cancellation operation of the consistent LBT failure after the corresponding operation is achieved.

After triggering the cancellation operation of the consistent LBT failure, the MAC layer may indicate, to the physical layer, the cancellation of the consistent LBT failure or the cancellation of the resource pool that encounters the consistent LBT failure.

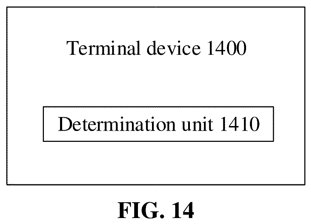

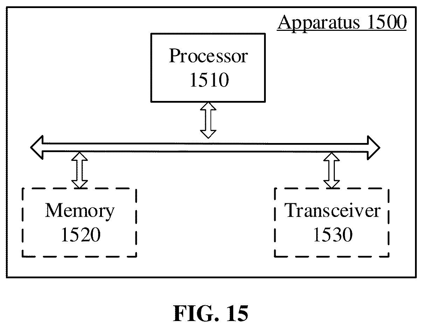

The method embodiments of the present disclosure are described in detail above with reference to FIGS. 1 to 13, and device embodiments of the present disclosure will be described in detail below with reference to FIGS. 14 and 15. It should be understood that the description of the method embodiments and the description of the device embodiments correspond to each other. Therefore, the parts not described in detail may refer to the previous method embodiments.

FIG. 14 is a schematic block diagram of a terminal device according to an embodiment of the disclosure. The terminal device 1400 illustrated in FIG. 14 may be any terminal device described above. The terminal device 1400 may include a determination unit 1410.

The determination unit 1410 is configured to determine a first policy related to a consistent LBT failure, detection of the consistent LBT failure being related to a resource granularity.

In some embodiments, the resource granularity includes an RB set and/or a resource pool.

In some embodiments, the first policy includes one or more of: a resource switching policy, a second policy related to canceling a triggered consistent LBT failure, and a third policy related to determining the consistent LBT failure.

In some embodiments, the resource switching policy includes one or more of: switching a resource pool, switching an RB set, and switching a time-frequency resource.

In some embodiments, the resource switching policy includes switching the resource pool, and the terminal device further includes a switching unit, configured to switch the resource pool when a first condition is satisfied. The first condition is related to one or more of: whether the RB set encounters the consistent LBT failure; and a data transmission requirement.

In some embodiments, the first condition includes one or more of that: all RB sets associated with a current resource pool encounter the consistent LBT failure; and a number of remaining resources in the resource pool is less than or equal to a preset threshold. The remaining resources belong to resources that encounter no consistent LBT failure and/or resources that meet the data transmission requirement.

In some embodiments, the remaining resources include time-frequency resources and/or RB sets.

In some embodiments, if the resource switching policy includes switching the RB set or switching the time-frequency resource, the terminal device further includes a switching unit, configured to switch the RB set or the time-frequency resource when a current RB set encounters the consistent LBT failure.

In some embodiments, the consistent LBT failure occurs on the RB set.

In some embodiments, the resource switching policy includes switching the resource pool or switching the time-frequency resource.

In some embodiments, the terminal device further includes a a switching unit, configured to switch the resource pool or the time-frequency resource when a current resource pool encounters the consistent LBT failure.

In some embodiments, the consistent LBT failure occurs on the resource pool.

In some embodiments, the second policy includes: canceling the triggered consistent LBT failure of a first resource when a second condition is satisfied, and the second condition includes one or more of that: a first operation is performed by the terminal device, the first operation being related to resource switching; and a consistent LBT failure report is transmitted by the terminal device.

In some embodiments, the operation that the consistent LBT failure report is transmitted by the terminal device comprises one or more of that: the terminal device transmits the consistent LBT failure to a peer device; and the terminal device transmits the consistent LBT failure to a network device.

In some embodiments, the first operation includes one or more of that: the resource switching is performed; LBT in a switched resource is successful; data is successfully transmitted in a switched resource; and an RLF for a unicast link is triggered.

In some embodiments, the operation that the RLF for the unicast link is triggered includes one or more of that: LBT in a switched target resource is not successful; the consistent LBT failure is triggered for a switched target resource; and data is not successfully transmitted in a switched target resource. The target resource is all configured resources or a preset number of resources.

In some embodiments, the target resource includes a time-frequency resource and/or an RB set.

In some embodiments, if the second condition includes that the RLF for the unicast link is triggered, the first resource includes the target resource.

In some embodiments, the first resource includes one or more of: an RB set associated with one or more resource pools before switching; one or more RB sets before switching; and one or more resource pools before switching.

In some embodiments, if the first condition includes the consistent LBT failure report is transmitted by the terminal device, the first resource includes a resource corresponding to the transmitted consistent LBT failure.

In some embodiments, the terminal device further includes a transmission unit, configured to transmit, by an MAC layer, first indication information to a physical layer of the terminal device, the first indication information being configured to indicate cancellation of the consistent LBT failure and/or cancellation of a resource of the consistent LBT failure.

In some embodiments, the third policy includes: determining that a first RB set encounters the consistent LBT failure if a number of LBT failures that occur on the first RB set reaches a first preset threshold within a first preset duration; or the third policy includes: determining that a first resource pool encounters the consistent LBT failure if a number of LBT failures that occur on an RB set associated with the first resource pool reaches a second preset threshold within a second preset duration.

In some embodiments, a fact that the first RB set encounters the LBT failure is related to second information, and the second information includes one or more of that: all channels associated with the first RB set encounter an LBT failure; at least one channel related to the first RB set encounters an LBT failure; and a channel on which a resource for data transmission is located encounters an LBT failure.

In some embodiments, the second information is related to whether the terminal device is configured with a guardband.

In some embodiments, a selected resource for data transmission by the terminal device is determined based on second indication information, and the second indication information is configured to indicate one or more of: information of a target resource pool, determined based on information related to the consistent LBT failure; and information related to a target RB set.

In some embodiments, the target RB set includes one or more of: a selected RB set; and an RB set that encounters the consistent LBT failure.

In some embodiments, the selected RB set includes no RB set that encounters the consistent LBT failure.

In some embodiments, the target resource pool is associated with at least one RB set or resource pool for which no consistent LBT failure is triggered; and/or the target resource pool includes at least one resource pool for which no consistent LBT failure is triggered.

In some embodiments, the selected resource is transmitted by an MAC layer of the terminal device to a physical layer of the terminal device, the selected resource is determined by the MAC layer based on a second resource, and the second resource is determined by the physical layer through resource selection based on the second indication information.

In some embodiments, the second resource is determined based on one or more of: a resource in the target resource pool; a resource in a selected RB set; and a resource for which the consistent LBT failure is excluded.

FIG. 15 is a schematic structural diagram of a communication apparatus according to an embodiment of the present disclosure. The dashed line in FIG. 15 indicates that the unit or the module is optional. The apparatus 1500 may be configured to perform the methods described in the method embodiments described above. The apparatus 1500 may be a chip or a terminal device.

The apparatus 1500 may include one or more processors 1510. The processor 1510 may support the apparatus 1500 to perform the methods described in the previous method embodiments. The processor 1510 may be a general-purpose processor or a special-purpose processor. For example, the processor may be a central processing unit (CPU). Optionally, the processor may be another general purpose processor, a digital signal processor (DSP), an application-specific integrated circuit (ASIC), a field programmable gate array (FPGA), or another programmable logical device, discrete gate or transistor logical device, or discrete hardware component. The general-purpose processor may be a microprocessor or the processor may be any conventional processor and the like.

The apparatus 1500 may further include one or more memories 1520. The memory 1520 has stored a program that may be executed by the processor 1510 to cause the processor 1510 to perform the method described in the above method embodiments. The memory 1520 may be independent from the processor 1510, or may be integrated into the processor 1510.

The apparatus 1500 may also include a transceiver 1530. The processor 1510 may communicate with other devices or chips through the transceiver 1530. For example, the processor 1510 may transmit data to or receive data from other devices or chips through the transceiver 1530.

There is also provided a computer-readable storage medium in an embodiment of the present disclosure, the computer-readable storage medium is configured to store a program. The computer-readable storage medium may be applied to a terminal device in the embodiments of the present disclosure, and the program, when being run on a computer, causes the computer to perform methods that are performed by the terminal device in various embodiments of the present disclosure.

There is also provided a computer program product in an embodiment of the disclosure. The computer program product includes a program. The computer program product may be applied to a terminal device in the embodiments of the present disclosure, and the program, when being run on a computer, causes the computer to perform methods that are performed by the terminal device in various embodiments of the present disclosure.

There is also provided a computer program in an embodiment of the disclosure. The computer program may be applied to a terminal device in the embodiments of the present disclosure, and the computer program, when being run on a computer, causes the computer to perform methods that are performed by the terminal device in various embodiments of the present disclosure.

It should be understood that, terms "system" and "network" in the present disclosure may be interchangeably used. In addition, terms used in the present disclosure are used only for explanation of specific embodiments of this disclosure and are not intended to limit the invention. The terms "first", "second", "third", "fourth" and the like presented in the specification and claims of the present disclosure and the accompanying drawings are used for distinguishing different objects and are not for describing a particular order. Furthermore, the terms "including" and "having" and any variations thereof are intended to cover non-exclusive inclusion.

The word "indicating" mentioned in embodiments of the disclosure may be a direct indication or an indirect indication, and may also be indicative of a relationship. For example, A indicates B, which may represent that A directly indicates B, for example, B may be obtained through A; or that A indirectly indicates B, for example, A indicates C, and B may be obtained through C; or that there is an association between A and B.

In the embodiments of the present disclosure, the mentioned term "including" may refer to directly including or indirectly including. Alternatively, the term "including" in the embodiments of the present disclosure may be replaced with "indicating" or "for determining". For example, the expression that A includes B may be replaced with that A to indicating B, or A is for determining B.

In an embodiment of the present disclosure, the expression "B corresponding to A" means that B is associated with A, and B is determined according to A. However, it should also be understood that determining B according to A does not mean that B is determined according to A only, and that B may also be determined according to A and/or other information.

The word "correspondence" in the embodiments of the present disclosure may represent that the listed items have a direct or indirect correspondence relationship, or an association relationship, or a relationship of indicating and being indicated, configured and being configured, etc.

The phrase "being predefined" or "being preconfigured" mentioned in embodiments of the disclosure may be implemented by pre-storing corresponding codes, tables, or by other means that may be used for indicating associated information in devices (such as terminal devices and network devices), the specific implementation of which is not limited in the present disclosure. For example, predefinition may mean that it is defined in the protocol.

In the embodiments of the disclosure, the "protocol" may be a standard protocol in the communication field, such as an LTE protocol, an NR protocol, and related protocols applied in future communication systems, which is not limited herein.

The term "and/or" in the embodiments of the present disclosure is only used to describe an association relationship between the associated objects, and represents that three relationships may exist. For example, A and/or B may represent the three conditions: independent existence of A, existence of both A and B and independent existence of B. In addition, the character "/" in the present disclosure usually represents that previous and next associated objects form an "or" relationship

In various embodiments of the present disclosure, the size of the sequence number of the above-mentioned processes does not mean the execution order, and the execution order of various processes are determined by their function and inherent logics, and should not be limited in any way to the implementation process of the embodiments of the present disclosure.

In the several embodiments provided in this disclosure, it should be understood that the disclosed system, device, and method may be implemented in other schemes. For example, the described apparatus embodiments are merely exemplary. For example, the unit division is merely a logical function division and there may be other divisions in actual implementations. For example, multiple units or components may be combined or integrated into another system, or some features may be ignored or not performed. In addition, the displayed or discussed mutual coupling or direct coupling or communication connections may be an indirect coupling or communication connection implemented through some interfaces, apparatuses or units may be implemented in electrical, mechanical or other forms.

The units described as separate parts may be or may not be physically separate, and parts displayed as units may be or may not be physical units, they may be located in one place, or may be distributed on multiple network units. Some or all of the units may be selected according to actual needs to achieve the objectives of the solutions of the embodiments.

In addition, functional units in the embodiments of this disclosure may be integrated into one processing unit, or each of the units may exist physically and separately, or two or more units are integrated into one unit.

The above embodiments may be implemented in whole or in part by software, hardware, firmware or any combination thereof. When implemented in the form of software, the embodiments may be implemented in whole or in part in the form of a computer program product. The computer program product includes one or more computer instructions. When the computer program instructions are loaded and executed on a computer, all or part of the processes or functions described in accordance with embodiments of the present disclosure are generated. The computer may be a general purpose computer, a special purpose computer, a computer network, or other programmable devices. The computer instructions may be stored in a computer-readable storage medium or transmitted from a computer-readable storage medium to another computer-readable storage medium. For example, the computer instructions may be transmitted from a Web site, a computer, a server, or a data center to another Web site, computer, server, or data center through a wired (e.g. a coaxial cable, an optical fiber, a digital subscriber line (DSL)) or wireless (e.g. infrared, wireless, microwave, etc.) form. The computer-readable storage medium may be any available medium accessible to a computer or a data storage device such as a server, a data center, or the like that integrated with one or more available mediums. The available medium may be a magnetic medium (e.g. a floppy disk, a hard disk, a magnetic tape), an optical medium (e.g. a digital versatile disc (DVD)), or a semiconductor medium (e.g. a solid state disk (SSD)), etc.

The foregoing descriptions are merely specific implementations of this disclosure, but are not intended to limit the scope of protection of this disclosure. Any variation or replacement readily figured out by a person skilled in the art within the technical scope disclosed in this disclosure shall fall within the scope of protection of this disclosure. Therefore, the scope of protection of this disclosure shall be subject to the scope of protection of the claims.

## Claims

1. A method for wireless communication, comprising:
   determining, by a terminal device, a first policy related to a consistent listen before talk (LBT) failure, detection of the consistent LBT failure being related to a resource granularity.

2. The method of claim 1, wherein the resource granularity comprises a resource block (RB) set and/or a resource pool.

3. The method of claim 1 or 2, wherein the first policy comprises one or more of: a resource switching policy, a second policy related to canceling a triggered consistent LBT failure, and a third policy related to determining the consistent LBT failure.

4. The method of claim 3, wherein the resource switching policy comprises one or more of:
   switching a resource pool, switching an RB set, and switching a time-frequency resource.

5. The method of claim 4, wherein the resource switching policy comprises switching the resource pool, and the method further comprises:
   switching, by the terminal device, the resource pool when a first condition is satisfied, wherein the first condition is related to one or more of:

   whether the RB set encounters the consistent LBT failure; and
   a data transmission requirement.

6. The method of claim 5, wherein the first condition comprises one or more of that:

   all RB sets associated with a current resource pool encounter the consistent LBT failure; and
   a number of remaining resources in the resource pool is less than or equal to a preset threshold, wherein the remaining resources belong to resources that encounter no consistent LBT failure and/or resources that meet the data transmission requirement.

7. The method of claim 6, wherein the remaining resources comprise time-frequency resources and/or RB sets.

8. The method of claim 4, wherein the resource switching policy comprises switching the RB set or switching the time-frequency resource, and the method further comprises:
   switching, by the terminal device, the RB set or the time-frequency resource when a current RB set encounters the consistent LBT failure.

9. The method of any one of claims 4 to 8, wherein the consistent LBT failure occurs on the RB set.

10. The method of claim 3, wherein the resource switching policy comprises switching the resource pool or switching a time-frequency resource.

11. The method of claim 10, further comprising:
    switching, by the terminal device, the resource pool or the time-frequency resource when a current resource pool encounters the consistent LBT failure.

**12.** The method of claim 10 or 11, wherein the consistent LBT failure occurs on the resource pool.

**13.** The method of any one of claims 3 to 12, wherein the second policy comprises: canceling the triggered consistent LBT failure of a first resource when a second condition is satisfied, and the second condition comprises one or more of that:

> a first operation is performed by the terminal device, the first operation being related to resource switching; and
> a consistent LBT failure report is transmitted by the terminal device.

**14.** The method of claim 13, wherein the operation that the consistent LBT failure report is transmitted by the terminal device comprises one or more of that:

> the terminal device transmits the consistent LBT failure to a peer device; and
> the terminal device transmits the consistent LBT failure to a network device.

**15.** The method of claim 13 or 14, wherein the first operation comprises one or more of that:

> the resource switching is performed;
> LBT in a switched resource is successful;
> data is successfully transmitted in a switched resource; and
> a radio link failure (RLF) for a unicast link is triggered.

**16.** The method of claim 15, wherein the operation that the RLF for the unicast link is triggered comprises one or more of that:

> LBT in a switched target resource is not successful;
> the consistent LBT failure is triggered for a switched target resource; and
> data is not successfully transmitted in a switched target resource, wherein
> the target resource is all configured resources or a preset number of resources.

**17.** The method of claim 16, wherein the target resource comprises a resource pool and/or an RB set.

**18.** The method of claim 16 or 17, wherein if the second condition comprises that the RLF for the unicast link is triggered, the first resource comprises the target resource.

**19.** The method of any one of claims 13 to 17, wherein the first resource comprises one or more of:

> an RB set associated with one or more resource pools before switching;
> one or more RB sets before switching; and
> one or more resource pools before switching.

**20.** The method of any one of claims 13 to 17, wherein if the first condition comprises that the consistent LBT failure report is transmitted by the terminal device, the first resource comprises a resource corresponding to the transmitted consistent LBT failure.

**21.** The method of any one of claims 13 to 20, further comprising:
transmitting, by a media access control (MAC) layer of the terminal device, first indication information to a physical layer of the terminal device, the first indication information being configured to indicate cancellation of the consistent LBT failure and/or cancellation of a resource of the consistent LBT failure.

**22.** The method of any one of claims 3 to 21, wherein the third policy comprises: determining that a first RB set encounters the consistent LBT failure if a number of LBT failures that occur on the first RB set reaches a first preset threshold within a first preset duration; or the third policy comprises: determining that a first resource pool encounters the consistent LBT failure if a number of LBT that occur on an RB set associated with the first resource pool reaches a second preset threshold within a second preset duration.

**23.** The method of claim 22, wherein a fact that the first RB set encounters the LBT failure is related to second information, and the second information comprises one or more of that:

> all channels associated with the first RB set encounter an LBT failure;
> at least one channel related to the first RB set encounters an LBT failure; and
> a channel on which a resource for data transmission is located encounters an LBT failure.

**24.** The method of claim 23, wherein the second information is associated with whether the terminal device is configured with a guardband.

**25.** The method of any one of claims 1 to 24, wherein a selected resource for data transmission by the terminal device is determined based on second indication information, and the second indication information is configured to indicate one or more of:

> information of a target resource pool, the information of a target resource pool being determined based on information related to the consistent LBT failure; and
> information related to a target RB set.

**26.** The method of claim 25, wherein the target RB set comprises one or more of:

> a selected RB set; and
> an RB set that encounters the consistent LBT failure.

**27.** The method of claim 26, wherein the selected RB set comprises no RB set that encounters the consistent LBT failure.

**28.** The method of any one of claims 25 to 27, wherein the target resource pool is associated with at least one RB set or resource pool for which no consistent LBT failure is triggered; and/or the target resource pool comprises at least one resource pool for which no consistent LBT failure is triggered.

**29.** The method of any one of claims 25 to 28, wherein the selected resource is transmitted by an MAC layer of the terminal device to a physical layer of the terminal device, the selected resource is determined by the MAC layer based on a second resource, and the second resource is determined by the physical layer through resource selection based on the second indication information.

**30.** The method of claim 29, wherein the second resource is determined based on one or more of:

> a resource in the target resource pool;
> a resource in a selected RB set; and
> a resource for which the consistent LBT failure is excluded.

**31.** A terminal device, comprising:
a determination unit, configured to determine a first policy related to a consistent listen before talk (LBT) failure, detection of the consistent LBT failure being related to a resource granularity.

**32.** The terminal device of claim 31, wherein the resource granularity comprises a resource block (RB) set and/or a resource pool.

**33.** The terminal device of claim 31 or 32, wherein the first policy comprises one or more of: a resource switching policy, a second policy related to canceling a triggered consistent LBT failure, and a third policy related to determining the consistent LBT failure.

**34.** The terminal device of claim 33, wherein the resource switching policy comprises one or more of: switching a resource pool, switching an RB set, and switching a time-frequency resource.

**35.** The terminal device of claim 34, wherein the resource switching policy comprises switching the resource pool, and the terminal device further comprises:
a switching unit, configured to switch the resource pool when a first condition is satisfied, wherein the first condition is related to one or more of:

> whether the RB set encounters the consistent LBT failure; and
> a data transmission requirement.

**36.** The terminal device of claim 35, wherein the first condition comprises one or more of that:

> all RB sets associated with a current resource pool encounter the consistent LBT failure; and
> a number of remaining resources in the resource pool is less than or equal to a preset threshold, wherein the remaining resources belong to resources that encounter no consistent LBT failure and/or resources that meet the data transmission requirement.

**37.** The terminal device of claim 36, wherein the remaining resources comprise time-frequency resources and/or RB sets.

**38.** The terminal device of claim 34, wherein the resource switching policy comprises switching the RB set or switching the time-frequency resource, and the terminal device further comprises:
a switching unit, configured to switch the RB set or the time-frequency resource when a current RB set encounters the consistent LBT failure.

**39.** The terminal device of any one of claims 34 to 38, wherein the consistent LBT failure occurs on the RB set.

**40.** The terminal device of claim 33, wherein the resource switching policy comprises switching the resource pool or switching a time-frequency resource.

**41.** The terminal device of claim 40, further comprising:
a switching unit, configured to switch the resource pool or the time-frequency resource when a current resource pool encounters the consistent LBT failure.

**42.** The terminal device of claim 40 or 41, wherein the consistent LBT failure occurs on the resource pool.

**43.** The terminal device of any one of claims 33 to 42, wherein the second policy comprises: canceling the triggered consistent LBT failure of a first resource when a second condition is satisfied, and the second condition comprises one or more of that:

> a first operation is performed by the terminal device, the first operation being related to resource switching; and

a consistent LBT failure report is transmitted by the terminal device.

44. The terminal device of claim 43, wherein the operation that the consistent LBT failure report is transmitted by the terminal device comprises one or more of that:

the terminal device transmits the consistent LBT failure to a peer device; and
the terminal device transmits the consistent LBT failure to a network device.

45. The terminal device of claim 43 or 44, wherein the first operation comprises one or more of that:

the resource switching is performed;
LBT in a switched resource is successful;
data is successfully transmitted in a switched resource; and
a radio link failure (RLF) for a unicast link is triggered.

46. The terminal device of claim 45, wherein the operation that the RLF for the unicast link is triggered comprises one or more of that:

LBT in a switched target resource is not successful;
the consistent LBT failure is triggered for a switched target resource; and
data is not successfully transmitted on a switched target resource, wherein
the target resource is all configured resources or a preset number of resources.

47. The terminal device of claim 46, wherein the target resource comprises a resource pool and/or an RB set.

48. The terminal device of claim 46 or 47, wherein if the second condition comprises that the RLF for the unicast link is triggered, the first resource comprises the target resource.

49. The terminal device of any one of claims 43 to 47, wherein the first resource comprises one or more of:

an RB set associated with one or more resource pools before switching;
one or more RB sets before switching; and
one or more resource pools before switching.

50. The terminal device of any one of claims 43 to 47, wherein if the first condition comprises that the consistent LBT failure report is transmitted by the terminal device, the first resource comprises a resource corresponding to the transmitted consistent LBT failure.

51. The terminal device of any one of claims 43 to 50, further comprising:

a transmission unit, configured to transmit, by a media access control (MAC) layer, first indication information to a physical layer of the terminal device, the first indication information being configured to indicate cancellation of the consistent LBT failure and/or cancellation of a resource of the consistent LBT failure.

52. The terminal device of any one of claims 33 to 51, wherein the third policy comprises: determining that a first RB set encounters the consistent LBT failure if a number of LBT failures that occur on the first RB set reaches a first preset threshold within a first preset duration; or
the third policy comprises: determining that a first resource pool encounters the consistent LBT failure if a number of LBT failures that occur on an RB set associated with the first resource pool reaches a second preset threshold within a second preset duration.

53. The terminal device of claim 52, wherein a fact that the first RB set encounters the LBT failure is related to second information, and the second information comprises one or more of that:

all channels associated with the first RB set encounter an LBT failure;
at least one channel related to the first RB set encounters an LBT failure; and
a channel on which a resource for data transmission is located encounters an LBT failure.

54. The terminal device of claim 53, wherein the second information is associated with whether the terminal device is configured with a guardband.

55. The terminal device of any one of claims 31 to 54, wherein a selected resource for data transmission by the terminal device is determined based on second indication information, and the second indication information is configured to indicate one or more of:

information of a target resource pool, the information of a target resource pool being determined based on information related to the consistent LBT failure; and
information related to a target RB set.

56. The terminal device of claim 55, wherein the target RB set comprises one or more of:

a selected RB set; and
an RB set that encounters the consistent LBT failure.

**57.** The terminal device of claim 56, wherein the selected RB set comprises no RB set that encounters the consistent LBT failure.

**58.** The terminal device of any one of claims 55 to 57, wherein the target resource pool is associated with at least one RB set or resource pool for which no consistent LBT failure is triggered; and/or the target resource pool comprises at least one resource pool for which no consistent LBT failure is triggered.

**59.** The terminal device of any one of claims 55 to 58, wherein the selected resource is transmitted by an MAC layer of the terminal device to a physical layer of the terminal device, the selected resource is determined by the MAC layer based on a second resource, and the second resource is determined by the physical layer through resource selection based on the second indication information.

**60.** The terminal device of claim 59, wherein the second resource is determined based on one or more of:

a resource in the target resource pool;
a resource in a selected RB set; and
a resource on which the consistent LBT failure is excluded.

**61.** A terminal device, comprising a memory and a processor, wherein the memory is configured to store a program and the processor is configured to call the computer program in the memory, to perform the method according to any one of claims 1 to 30.

**62.** An apparatus, comprising a processor configured to call a program in a memory, to perform the method according to any one of claims 1 to 30.

**63.** A chip, comprising a processor configured to call a program stored in a memory, to cause a device on which the chip is mounted to perform the method according to any one of claims 1 to 30.

**64.** A computer-readable storage medium having stored thereon a program which causes a computer to perform the method according to any one of claims 1 to 30.

**65.** A computer program product, comprising a program which causes a computer to perform the method according to any one of claims 1 to 30.

**66.** A computer program for causing a computer to perform the method according to any one of claims 1 to 30.

110

**100**

120

**FIG. 1**

110

120a

Sidelink
communication

120a

**FIG. 2**

**FIG. 3**

120b

Sidelink communication

120b

**FIG. 4**

Resource selection window

Sensing window

n-$T_0$    n    n+$T_1$    n+$T_2$    Time domain

**FIG. 5**

Terminal device 2

Terminal device 6

**Terminal device 1**

Terminal device 3

Terminal device 5

Terminal device 4

**FIG. 6**

Terminal device 1       Terminal device 2

Sidelink data

**FIG. 7**

**FIG. 8**

| Channel 1 | RB set A | Resource pool 1 |
|-----------|----------|-----------------|
| Channel 2 |          |                 |
| Channel 3 | RB set B | Resource pool 2 |
| Channel 4 |          |                 |

**FIG. 9**

A terminal device determines a first policy related to a consistent LBT failure based on first information — S1010

**FIG. 10**

EP 4 676 156 A1

FIG. 11

MAC
layer

Physical
layer

S1202 Trigger resource selection
or resource re-selection, second
indication information

S1204 Resource
selection

S1206 Set A

S1224 Cancel the
triggered consistent LBT
failure on the previous
RB set

S1208 Resource selection

S1210 Selected resource, data
packet to be transmitted, and so on

S1212 LBT failure
detection

S1214 LBT failure indication for
RB set 1

S1216 Start a timer for RB
set 1, increment a counter for
RB set 1 by 1

S1218 Whether
a value of the counter for RB set 1
is greater than or equal to a preset
threshold

No

S1222 Set the
counter for RB set 1
to zero

Yes

S1220 RB set 1 encounters
the consistent LBT failure

## FIG. 12

MAC layer

Physical layer

S1302 Trigger resource selection or resource re-selection, second indication information

S1304 Resource selection

S1306 Set A

S1324 Switch the resource pool

S1308 Resource selection

S1310 Selected resource, data packet to be transmitted, and so on

S1312 LBT failure detection

S1314 LBT failure indication

S1316 Start a timer for resource pool 1, increment a counter for resource pool 1 by 1

S1318 Whether a value of the counter for resource pool 1 is greater than or equal to a preset threshold

No

S1322 Set the counter for resource pool 1 to zero

Yes

S1320 resource pool 1 encounters the consistent LBT failure

**FIG. 13**

Terminal device 1400

Determination unit 1410

**FIG. 14**

**FIG. 15**

## INTERNATIONAL SEARCH REPORT

| | International application No. |
| --- | --- |
| | **PCT/CN2023/084122** |

**A.  CLASSIFICATION OF SUBJECT MATTER**

H04W74/08(2009.01)i

According to International Patent Classification (IPC) or to both national classification and IPC

**B.  FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, CNKI, VEN, DWPI, WOTXT, EPTXT, USTXT, 3GPP: 先听后说, 连续, 持续, 持久, 失败, 资源池, 资源块, 时频资源, 切换, 选择, 重选, 取消, 触发, 无线链路失败, 单播, LBT, continuous, listen before talk, failure, resource block, resource pool, RB, RLF, radio link failure, unicast, switch, select, resource, cancel, trigger

**C.  DOCUMENTS CONSIDERED TO BE RELEVANT**

| Category* | Citation of document, with indication, where appropriate, of the relevant passages | Relevant to claim No. |
| --- | --- | --- |
| X | WO 2022104545 A1 (GUANGDONG OPPO MOBILE COMMUNICATIONS CO., LTD.) 27 May 2022 (2022-05-27)<br>description, page 5, line 2 to page 16, line 18, and figures 1-9 | 1-66 |
| X | WO 2021203396 A1 (FUJITSU LTD.) 14 October 2021 (2021-10-14)<br>description, page 10, line 10 to page 31, line 2, and figures 1-22 | 1-66 |
| X | CN 115835418 A (WEIWO SOFTWARE TECHNOLOGY CO., LTD.) 21 March 2023 (2023-03-21)<br>description, paragraphs [0083]-[0367], and figures 1-11 | 1-66 |
| X | CN 115734202 A (HUAWEI TECHNOLOGIES CO., LTD.) 03 March 2023 (2023-03-03)<br>description, paragraphs [0072]-[0265], and figures 1a-5 | 1-66 |
| X | CN 115315017 A (SPREADTRUM COMMUNICATIONS (SHANGHAI) CO., LTD.) 08 November 2022 (2022-11-08)<br>description, paragraphs [0074]-[0248], and figures 1-9 | 1-66 |

☑ Further documents are listed in the continuation of Box C. ☑ See patent family annex.

| | |
| --- | --- |
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **03 December 2023** | **07 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/084122**

| C. | DOCUMENTS CONSIDERED TO BE RELEVANT | |
|---|---|---|
| Category* | Citation of document, with indication, where appropriate, of the relevant passages | Relevant to claim No. |
| A | CN 115701738 A (DATANG MOBILE COMMUNICATIONS EQUIPMENT CO., LTD.) 10 February 2023 (2023-02-10)<br>entire document | 1-66 |
| A | US 2022394761 A1 (QUALCOMM INC.) 08 December 2022 (2022-12-08)<br>entire document | 1-66 |

Form PCT/ISA/210 (second sheet) (July 2022)

**INTERNATIONAL SEARCH REPORT**
Information on patent family members

International application No.

**PCT/CN2023/084122**

| Patent document cited in search report | | | Publication date (day/month/year) | Patent family member(s) | | | Publication date (day/month/year) |
|---|---|---|---|---|---|---|---|
| WO | 2022104545 | A1 | 27 May 2022 | US | 2023209599 | A1 | 29 June 2023 |
| | | | | EP | 4250858 | A1 | 27 September 2023 |
| WO | 2021203396 | A1 | 14 October 2021 | US | 2023025873 | A1 | 26 January 2023 |
| | | | | JP | 2023520691 | A | 18 May 2023 |
| CN | 115835418 | A | 21 March 2023 | WO | 2023040893 | A1 | 23 March 2023 |
| CN | 115734202 | A | 03 March 2023 | WO | 2023030088 | A1 | 09 March 2023 |
| CN | 115315017 | A | 08 November 2022 | WO | 2022233134 | A1 | 10 November 2022 |
| CN | 115701738 | A | 10 February 2023 | WO | 2023011357 | A1 | 09 February 2023 |
| US | 2022394761 | A1 | 08 December 2022 | WO | 2022260767 | A1 | 15 December 2022 |
| | | | | WO | 2022260767 | A8 | 14 September 2023 |

Form PCT/ISA/210 (patent family annex) (July 2022)